# EUROPÄISCHE PATENTSCHRIFT

(11) **EP 2 843 440 B1**
(45) Veröffentlichungstag und Bekanntmachung des Hinweises auf die Patenterteilung: **28.11.2018**
(21) Anmeldenummer: 13182074.8
(22) Anmeldetag: 28.08.2013
(51) Int. Cl.: G01S 17/02, G01S 17/10, F41G 3/06

(54) **Stabilisierte Entfernungsmessung im Beobachtungsgerät**
Stabilised distance measurement in an observation device
Mesure de distance stabilisée dans un appareil d'observation

(43) Veröffentlichungstag der Anmeldung: 04.03.2015
(73) Patentinhaber: Safran Vectronix AG, 9435 Heerbrugg (CH)
(72) Erfinder: Giacotto, Luca, CH-9434 Au (CH)
(74) Vertreter: Kaminski Harmann

(56) Entgegenhaltungen:
- WO-A1-2012/045802
- US-A- 6 023 322
- US-A1- 2004 046 953

## Beschreibung

Die Erfindung betrifft ein Beobachtungsgerät mit Entfernungsmesser nach dem Oberbegriff des Anspruchs 1 sowie ein Entfernungsmessverfahren für ein Beobachtungsgerät nach dem Oberbegriff des Anspruchs 11 und ein Computerprogrammprodukt nach dem Oberbegriff des Anspruchs 15.

Derartige Beobachtungsgeräte haben vielfältige Einsatzgebiete, etwa bei der Jagd, zur Landmarken-Navigation auf Land oder See, zur Anpeilung von Objekten, zur Erfassung und Dokumentation von geographischen Gegebenheiten, als Informationsgerät für Wanderer, etc. Neben diesen zivilen Einsatzgebieten werden derartige Geräte auch im militärischen Bereich zur Navigation, Observation, etc. angewendet. Dabei ist wichtig, dass die Gerätschaft robust, handlich, schnell und einfach zu bedienen, sowie möglichst kompakt und leicht ist.

Die Beobachtungsgeräte im Rahmen der vorliegenden Erfindung sind für einen Einsatz im Feld konzipierte, robuste Geräte. Es handelt sich nicht um höchstpräzise und entsprechend empfindliche geodätische Vermessungsgeräte wie Tachymeter oder Theodoliten mit Messauflösungen im Millimeterbereich oder darunter, welche im z.B. Bauwesen angewandt werden. Die hier beschrieben Geräte haben meist Messauflösungen in der Grössenordung von Metern oder allenfalls Dezimetern, jedoch Messreichweiten von einigen Kilometer, beispielsweise von bis zu fünf oder dreißig Kilometern oder mehr. Die Beobachtungsgeräte sind primär zur handgehaltenen Verwendung durch Personen gedacht, also beispielsweise, als Ferngläsern bzw. Feldstechern oder Binokulare, Monokulare, Zielfernrohre, tragbare Waffensysteme, etc. ausgebildet, können jedoch bei Bedarf auch durchaus auf ein Stativ oder dergleichen montierbar sein.

Die hier behandelten Beobachtungsgeräte können insbesondere einen optischen Durchlichtkanal aufweisen - also in ihrer Grundfunktion klassische optische Geräte sein, bei denen optische Strahlung vom beobachteten Zielobjekt direkt in das Auge des Beobachters gelenkt wird. Es können aber in anderen Ausführungen auch Beobachtungsgeräte sein, bei welchen eine Aufnahme eines Beobachtungsbildes mit einer Kamera, Umwandlung des Bildes elektrische Signale und eine Wiedergabe der elektrischen Signale auf einer Bildschirmanzeige für den Beobachter erfolgt. Dabei kann speziell bei den Geräten mit Bildschirm die Beobachtung durch ein Okular im klassischen Sinne erfolgen, durch welches das aufgenommene Beobachtungsbild betrachtet werden kann. Der Beobachtungspfad kann dabei durchaus optische Elemente zur Strahlformung, Strahlumlenkung, Ein- und Ausspiegelung von Informationen, Restlichtverstärkung, etc. aufweisen. Speziell kann es sich dabei um handgehaltene Beobachtungsgeräte, bzw. entfernungsmessende Beobachtungsgeräte welche gattungsgemäß zu einer Nutzung als handgehaltenes Gerät ausgebildet sind, etwa durch entsprechende Griffe, Formgebung, etc.

Die optische Anzielung mit dem Beobachtungsgerät bestimmt dabei auch die Richtung der Entfernungsmessung. Die Anzielung des zu vermessenden Punktes erfolgt dabei mittels einer optischen Einrichtung des Durchlichtkanals, beispielsweise mit einem Fadenkreuz in der Beobachtungseinrichtung des Geräts. Bei elektrooptischen Distanz- bzw. Entfernungsmessern (EDM) wird ein optisches Signal vom Gerät in Richtung des Zielobjekts ausgesendet, dessen Distanz es zu bestimmen gilt, beispielsweise als optische Strahlung in Form von Laserlichtpulsen. Wird dabei sichtbares Licht verwendet, so kann bei entsprechenden Lichtverhältnissen der zur Vermessung angezielte Punkt auf dem Zielobjekt visuell erkennbar sein. Vielfach werden jedoch nichtsichtbare Wellenlängen, z.B. im Infrarotbereich, verwendet und der zur Vermessung angezielte Punkt auf dem Zielobjekt bestimmt sich für den Benutzer rein durch die Anzielung mit dem Beobachtungskanal des Geräts.

Die Oberfläche des Zielobjekts wirft zumindest einen Teil des ausgesendeten optischen Signals zurück, meist in Form einer diffusen Reflektion. Die zurückgeworfene optische Strahlung wird im Gerät von einem photosensitiven Detektorelement in ein elektrisches Empfangssignal umgewandelt. Unter Kenntnis der Ausbreitungsgeschwindigkeit des optischen Signals und anhand der ermittelten Laufzeit zwischen Aussenden und Empfangen des Signals (also jener Laufzeit, welche Licht für das Zurücklegen der Entfernung vom Gerät zum Zielobjekt und retour benötigt) kann die Distanz zwischen Gerät und Zielobjekt bestimmt werden. Meist befinden sich dabei im optischen Sende- bzw. Empfangspfad eine oder mehrere optische Komponenten zur Strahlformung, Umlenkung, Filterung, etc. - wie etwa Linsen, Wellenlängenfilter, Spiegel usw. Das Aussenden und Empfangen kann dabei koaxial durch einen einzige oder getrennt mit zwei getrennten, (z.B. nebeneinander angeordneten) Optiken erfolgen. Der Distanz- oder Entfernungsmesser ist dabei im Beobachtungsgerät integriert.

Zur Kompensation von Einflüssen, welche die Messergebnisse verfälschen könnten (beispielsweise Temperatureinflüsse, Bauteiltoleranzen, Driften von elektronischen Komponenten, etc.), kann ein Teil des ausgesendeten optischen Signals als Referenzsignal über eine Referenzstrecke bekannter Länge von der Lichtquelle zu einem lichtempfindlichen Empfangselement geführt werden. Die Referenzstrecke kann dabei fix im Gerät eingebaut sein oder beispielsweise als ein einschwenkbares oder aufsteckbares optisches Umlenkelement ausgebildet sein. Das von diesem Referenzsignal resultierende Empfangssignal kann von dem zur Zielentfernungsmessung verwendeten oder von einem weiteren, eigens für das Referenzsignal vorgesehenen, photosensitiven Element empfangen werden. Das resultierende elektrische Referenzsignal kann zur Referenzierung und/oder Kalibrierung der ermittelten Entfernungsmesswerte herangezogen werden.

Um eine entsprechend hohe Genauigkeit der Distanzmessung zu erzielen, sind aufgrund der hohen Ausbreitungsgeschwindigkeit von optischer Strahlung die Anforderungen an das zeitliche Auflösungsvermögen des elektrooptischen Distanzmessers (EDM) recht hoch. Beispielsweise ist für eine Distanzauflösung von 1m eine Zeitauflösung mit einer Genauigkeit von etwa 6,6 Nanosekunden erforderlich.

Für die Messung sind hinreichend starke, vom Empfänger detektierbare, Signalintensitäten des zurückkommenden Empfangssignals erforderlich. Die emittierbare Signalleistung des Sendesignals der hier behandelten optoelektronischen EDM ist jedoch durch physikalische und regulatorische Limiten beschränkt. Vielfach wird daher im Pulsbetrieb gearbeitet. Das ausgesendete optische Signal ist also in seiner Intensitätsamplitude impulsartig moduliert. Es werden zeitlich kurze Pulse, mit hoher Spitzenleistung ausgesendet, gefolgt von Pausen in denen keine Lichtemission stattfindet. Somit weist der zurückgeworfene Anteil der Pulse eine genügend hohe Intensität auf, um diese aus den Hintergrundstörungen und dem Rauschen, insbesondere auch bei Vorhandensein von Hintergrundlicht (Sonnenlicht, künstlicher Beleuchtung, etc.), auswerten zu können.

Bei Beobachtungsgeräten mit Entfernungsmessern sind dabei Reichweiten von einigen Metern bis hin zu vielen Kilometern, etwa von 5m bis zu 20km oder 30km gefordert, und dieses bei einer Messgenauigkeit von einigen Metern oder gar darunter, beispielsweise von ±5m oder ±1m oder weniger. Da das Messziel dabei im allgemeinen keine speziellen reflektiven Zielmarken zur Messung aufweist (wie dies etwa bei den zur Landvermessung genutzten Meßlatten, Messprismen, etc. gebräuchlich ist), muss beim Gerätedesign das verwendete optische Entfernungsmesssignal derart aus- und festgelegt, dass eine Distanzmessung über den gesamten spezifizierten Messbereich möglich ist (bzw. der Bereich anhand der Möglichkeiten des verwendeten Signals spezifiziert werden). Da bei den natürlichen oder nichtkooperativen Zielen nur ein geringer Anteil der emittierten Strahlung zum Empfänger zurückkommt, werden die Signalinformationen von mehreren Pulsen (insbesondere Phasenrichtig) zur Auswertung kumuliert. Dabei wird das Signal-Rausch-Verhältnis (SNR) verbessert, um dadurch auch Messungen unter ungünstigen Konditionen zu ermöglichen. Durch die Verwendung mehrerer Messlichtpulse auf denselben Zielpunkt werden Störsignale ausgemittelt und das Nutzsignal verstärkt, was eine theoretische SNR-Verbesserung von etwa der Quadratwurzel aus der Anzahl der kumulierten Pulse entspricht.

Zur Ermittlung der Laufzeit des Signals ist zum einen die so genannte Time-of-Flight (TOF) Methode bekannt, welche die Zeit zwischen dem Aussenden und Empfangen eines Lichtpulses ermittelt, wobei die Zeitmessung anhand der Flanke, dem Spitzenwert oder einer anderen Charakteristik der Pulsform erfolgt. Unter Pulsform ist dabei ein zeitlicher Lichtintensitätsverlauf des Empfangssignals, speziell des empfangenen Lichtpulses - erfasst durch das photosensitive Element - zu verstehen. Der Zeitpunkt des Sendens kann entweder anhand eines elektrischen Impulses zur Auslösung der Emission, anhand des an den Sender angelegten Ansteuersignals oder anhand eines oben erwähnten Referenzsignals ermittelt werden.

Alternativ ist auch das sogenannte Phasenmessprinzip bekannt, welches die Signallaufzeit durch Vergleich der Phasenlage der Amplitudenmodulation des gesendeten und empfangenen Signals ermittelt. Dabei hat das Messergebnis bei einer Sendefrequenz aber Mehrdeutigkeiten in Einheiten der Sendefrequenzperiodendauer, sodass weitere Maßnahmen zur Auflösung dieser Mehrdeutigkeiten erforderlich sind. Beispielsweise zeigt WO 2006/063740 ein Messen mit mehreren Signalfrequenzen, welche in unterschiedlichen Eindeutigkeitsbereichen resultieren, wodurch falsche Lösungen ausgeschlossen werden können. Auch WO 2007/022927 behandelt Eindeutigkeiten in der Phasenmessung.

In einem typischen Benutzungsszenario visiert der Benutzer mit dem Beobachtungsgerät ein gewünschtes Ziel an und löst dann, beispielsweise durch Betätigung eine Auslösetasters oder dergleichen, den Entfernungsmessvorgang aus. Daraufhin erhält er das Messergebnis oder von diesem abgeleitete, weiterführende Informationen, wie Koordinaten, etc. angezeigt, vorzugsweise direkt über den Beobachtungskanal des Beobachtungsgeräts.

Das Beobachtungsgerät kann mit Mitteln zur Bestimmung von geographischen Koordinaten, wie einem GPS, einer Sternbilderkennung, eine Richtungsmesseinheit, eine Kompasseinheit, Neigungssensoren bzw. Bescheunigungssensoren, eine Nachtsichtfunktion, etc. ausgestattet sein. Mit einem elektronischen Display zum Bereitstellen von Information kann z.B. ein Bild einer Kamera, Standortinformation beispielsweise in Form einer Karte, gemessene Entfernungen oder Richtungen, gespeicherte Informationen bzgl. eines anvisierten Zielobjekts, Temperatur- und Wetterinformationen anhand des elektronischen Displays dem Benutzer im Durchlichtkanal bereitgestellt werden. Je nach Anwendungsgebiet und Anforderung an die jeweilige Messsituation kann das Beobachtungsgerät in einer angepassten Ausführungsform, z.B. mit einem Nachtsichtmodul, etc., ausgerüstet sein. In diesem Zusammenhang schlägt die EP 1 744 196 beispielhaft einige unterschiedliche Ausführungsformen für ein gattungsgemäßes Beobachtungsgerät vor, etwa für Zielmarkierung, für militärische Anwendungen oder zu Jagdzwecken.

Bei einer handgehaltenen Beobachtung ist dabei mit Instabilitäten und Bewegungen des Geräts durch die Handhaltung, speziell in Form von Oszillationen oder oszillationsartigen Bewegungen durch ein Zittern, Schwanken oder Zucken des Benutzers zu rechnen. Dies wirkt sich besonders bei weit entfernten Zielen und starken Vergrösserungen deutlich sichtbar aus. Bei Entfernungen im Kilometerbereich bewirken schon geringe Winkeländerungen der Anzielrichtung laterale Verschiebungen des beobachteten Zieles in der Bildebene, welche etlichen Metern entsprechen. Somit ist ein andauerndes, exaktes Anzielen eines verhältnismäßig kleinen und weit entfernten Zieles mit einem handgehaltenen Beobachtungsgerät für den Benutzer oft schwierig und erfordert ein hohes Maß an Konzentration und Körperbeherrschung. Auch bei einer Verwendung des Geräts auf einem instabilen Untergrund, wie einem Land-, Luft- oder Wasserfahrzeug oder bei Erschütterungen des Erdbodens können ähnliche Schwankungen der Raumlage des Geräts auftreten.

Durch die Bewegungen des Beobachtungsgeräts erfolgt die Entfernungsmessung bei einer dabei erfolgenden Berücksichtigung von mehreren Messlichtpulsen nicht mehr auf denselben Zielpunkt, sondern auf eine Vielzahl von unterschiedlichen Punkten, welche zumindest teilweise variierende Entfernungen aufweisen können. Daher bewirkt in einem solchen Fall die Anwendung einer Zusammenfassung von Informationen von mehreren Pulsen zur Distanzbestimmung nur eine zu einer geringen Verbesserung des SNR als dies die Überlagerung von Informationen aus mehreren Pulsen in der Theorie verspricht. Dieses verschlechterte SNR kann zu größeren Messunsicherheiten, größeren Messfehlern oder gar zu einem Versagen der Messung führen. Ein weiteres Verlängern der Messdauer zur Aussendung von weiteren Pulsen zur Verbesserung des SNR ist zum einen unerwünscht und zum anderen aufgrund der dabei auftretenden weiteren Zielpunktabweichungen auch nur bedingt effizient.

Im Stand der Technik wird zur Vermeidung von ZitterBewegungen durch eine Handhaltung ein aktives Dämpfen oder verhindern von Bewegungen durch eine Nutzung eines Stabes oder Stativs zur Stützung des Geräts angewandt. Ein solcher zusätzlicher Aufwand zur Aufstellung des Geräts ist insbesondere in Hinblick auf die primäre Auslegung als handgehaltenes Gerät jedoch unerwünscht.

Mechanische Bewegungen von optischen Elementen im Geräteinneren ist eine andere bekannte Lösung zur aktiven Richtungsstabilisierung von Beobachtungsgeräten, welche jedoch meist aufwändig in ihrer Realisierung ist, die Robustheit des Geräts verringert und das Gerät größer und schwerer macht. Zudem müssen derartige aktive Stabilisierungen mit Energie versorgt werden.

Aus dem Bereich von digitalem Foto- und Video-Equipment ist auch eine digitale Stabilisierung eines Beobachtungsbildes eines handgehaltenen Geräts mit einer rein bildschirmbasierten Beobachtung bekannt. Bei den Beobachtungsgeräten der vorliegenden Erfindung kann eine derartige digitale Bildstabilisierung zwar optional auch vorhanden sein, jedoch ist diese dann Funktional getrennt von dem erfindungsgemäßen Ansatz, welcher ohne Bildverarbeitung oder daraus gewonnenen Informationen auskommt. Die erfindungsgemäße Stabilisation der Entfernungsmessung ist also nicht abhängig von durch digitale Bildverarbeitung generierten Informationen.

Zur digitalen Stabilisierung nötige elektronische Komponenten verbrauchen z.B. zusätzliche Energie und verringern die Robustheit in rauen Einsatzumgebungen, etwa durch eingeschränkte Temperaturbetriebsbereiche von LC-Displays und CCD-Kameras. Beschränkte optische Dynamikbereiche dieser Elemente und der hohe Rechenaufwand zur digitalen Verarbeitung von Bildinformationen sind weitere unerwünschte Nebeneffekte solcher Lösungen. Eine spezielle Ausführungsform eines erfindungsgemäßen Beobachtungsgeräts mit optischem Durchlichtkanal kann hingegen auch ohne elektrische Energie, etwa bei defekter oder leerer Batterie, z.B. bei lange andauernden Einsätzen, seine Grundfunktionalität - einer vergrößerten Beobachtung entfernter Objekte - weiterhin erfüllen und nicht nur zu nutzlosem High-Tech-Ballast degradiert. Zudem wird bei derartigen Ausführungsformen auch die zu erwartende Batterielebensdauer deutlich erhöht.

Das Dokument FR 2 921 149 beschreibt ein digitales Gerät aus der Fernmesstechnik mit einer Kamera-Aufnahmeeinheit und einem elektronischen Display zur Anzeige des aufgenommenen Bildes. Um dem Benutzer trotz der Bewegungen der Handhaltung ein klares Beobachtungsbild darzustellen, wird das aufgenommen Kamerabild vor der Anzeige numerisch stabilisiert. Da bei dieser Stabilisierung die Information über die tatsächliche aktuelle Zielrichtung verloren geht, wird diese zusätzlich auch im stabilisierten Bild auf dem Display dargestellt. Eine Distanzmessung zu einem Zielobjekt erfolgt dabei in zwei Schritten. Erst erfolgt ein Anzielen des gewünschten Zieles mit einem Fadenkreuz im stabilisierten Bild am Display, welches durch das Auslösen einer Messanfrage bestätigt wird. Das Auslösen einer Distanzmessung erfolgt dabei aber nicht direkt mit der Betätigung der Auslösung. Erst im zweiten Schritt muss der Benutzter durch Bewegung der Ausrichtung des Beobachtungsgeräts versuchen, die im Display dargestellte aktuelle Zielrichtung der Entfernungsmessung mit dem Fadenkreuz im stabilisierten Bild hinreichend in Übereinstimmung zu bringen. Stellt das Gerät die Übereinstimmung fest, so sendet es nunmehr zu diesem späteren Zeitpunkt den einen einzigen Lichtpuls zur Distanzmessung aus, anhand welches die Distanz zum Ziel im Fadenkreuz des stabilisierten Bildes bestimmt wird. Das beschriebene System löst dabei lediglich das mit der Bildstabilisierung neu eingeführte Problem einer unbekannten Zielrichtung des bildschirmbasierten, bildstabilisierten entfernungsmessenden Beobachtungsgeräts. Dieses System hat neben den bereits erwähnten Nachteilen von vollelektronischen Beobachtungen und der digitalen Bildverarbeitungen der Bildstabilisierungen, etc. Zudem basiert das System von FR 2 921 149 auf einer Einzelpulsmessung, bei welcher nicht Signalinformationen von mehreren Pulsen zur Messwertbildung zusammengefasst werden, sondern das Ziel nur entweder getroffen oder verfehlt werden kann..

FR 2 965 935 zeigt ebenfalls ein Beobachtungsgerät mit indirekter, kamerabasierter Beobachtung mit einem digital stabilisierten Beobachtungsbild, bei welchem eine Akkumulation von mehreren Laserpulsen zur Distanzbestimmung erfolgt. Dabei wird bei Auslösung der Messung eine Folge von Lichtpulsen emittiert. Die zurückgeworfenen Echos werden mit Messdaten einer Gyroskop-Messung der aktuellen Zitterbewegungen - als Richtungsabweichung in Bezug auf die Zielrichtung des stabilisierten Anzeigebilds verknüpft. Auf Basis dieser Winkelabweichung werden die Echos entsprechenden Zonen im Zielbereich zugeordnet. Die Messwerte aus jener Zone, in welcher der beste SNR-Wert erzielt wird, werden zur Bestimmung der Distanz herangezogen, welche dem Benutzer präsentiert wird.

Es ist eine Aufgabe der vorliegenden Erfindung, ein Beobachtungsgerät mit optoelektronischem Distanzmesser zur Entfernungsmessung zu einem angezielten Zielobjekt zu verbessern, insbesondere eines handgehaltenen Beobachtungsgeräts, z.B. mit einem optischen Durchlichtpfad zur Beobachtung und Anzielung.

Eine Aufgabe ist dabei speziell eine zuverlässige Entfernungsbestimmung zum mit dem Durchlichtkanal angezielten Zielobjekt zu erzielen, auch wenn die Raumlage des Geräts während der Messung instabil ist, also selbst dann, wenn die Anzielung während eines Zeitfensters der Entfernungsbestimmung gelegentlich das Zielobjekt verfehlt.

Es ist insbesondere eine Aufgabe die erzielbare Genauigkeit der Distanzmessung bei der Beobachtung zu verbessern bzw. jenen Distanzbereich, in welchem eine zuverlässig Distanzmessung auch bei Handhaltung des Geräts möglich ist, zu erweitern.

Als spezielle Aufgabe ist dabei unabhängig von Instabilitäten der Geräteraumlage eine Stabilisierung Richtung der Entfernungsmessung zu erzielen, ohne dabei bewegliche Komponenten im Gerät zu verwenden.

Erfindungsgemäß handelt es sich um ein handhaltbares Beobachtungsgerät mit einem Beobachtungspfad zur optischen Anzielung eines Zielobjekts, insbesondere eines unstabilisierten Beobachtungspfads, speziell mit einem optischen Durchlichtpfad von einem Objektiv zu einem Okular. Das Gerät ist mit einem optoelektronischen Entfernungsmesser zur Entfernungsmessung in Richtung der Anzielung ausgestattet. Der Entfernungsmesser hat eine Sendeeinheit zur Aussendung einer zeitlichen Folge von Pulsen optischer Strahlung, eine Empfangseinheit zum Empfang eines vom Zielobjekt zurückgeworfenen Anteils der optischen Strahlung und zur Ermittlung einer Signalinformation des zurückgeworfenen Anteils eines ausgesendeten Pulses, sowie eine elektronischen Auswerteeinheit, welche derart ausgebildet ist, dass auf Basis einer Signallaufzeit zwischen Aussendung und Empfang der optischen Strahlung eine Entfernung oder Distanz zum Zielobjekt ermittelbar ist.

Die Ermittlung der Entfernung erfolgt dabei unter Einbezug der Signalinformation von einer bestimmten Mindestanzahl von Pulsen, welche Mindestanzahl eine Mindestlänge eines Zeitfenster der Entfernungsmessung definiert. Das Gerät hat einen manuell betätigbaren Auslöser, dessen Betätigung einen Beginn des Zeitfensters der Entfernungsmessung bedingt.

Das erfindungsgemässe Beobachtungsgerät hat auch einen Bewegungssensor zur Erfassung einer Instabilität einer Raumlage des Beobachtungsgeräts und eine Ansteuerungseinheit des Entfernungsmessers. Die Ansteuerungseinheit ist dabei derart ausgebildet, dass die Steuerung des Entfernungsmessers anhand von durch den Bewegungssensors ermittelten Raumlagedaten derart erfolgt, dass die zur Mindestanzahl zählenden Pulse vorgegebene Kriterien hinsichtlich diesen zeitlich zugeordneten Raumlagedaten erfüllen.

Der Entfernungsmesser ist dabei insbesondere ein Laser-Distanzmesser mit einem kollimierten Laserstrahl als Zielachse.

Die Erfindung basiert auf der Erkenntnis, dass trotz Instabilitäten der Raumlage, etwa durch Zitter- oder Tremor-Bewegungen des Benutzers, die Anzielung in ihrem Mittel doch recht präzise erfolgt. Der Benutzer ist auch durchwegs in der Lage, das anvisierte Ziel trotz der Instabilitäten hinreichend gut zu erkennen, sodass eine aufwändige Stabilisierung des Okularbildes zwar durchaus annehmlich, jedoch zur Erfüllung der mit dem Gerät zu lösenden Aufgabe nicht zwingend erforderlich ist. Falls im Feld eine Handhaltung des Geräts zu grosse Störbewegungen verursacht, um eine sichere Beobachtung und/oder Anzielung vorzunehmen, wird meist ohnehin eine stabile Auflage, einen Stab oder ein Stativ zurückgegriffen um die eigentliche Ursache des Problems zu mindern bzw. abzuwenden.

Schwierigkeiten bereitet in der Praxis daher oft weniger das instabile Beobachtungsbild. Vielmehr führen tremorbedingte Abweichungen, welche sich meist als eine insbesondere unregelmässige Oszillation um einen Mittelwert der eigentlichen Anzielung widerspiegeln, zu Nachteilen bei der Entfernungsmessung. Insbesondere im Bereich der Spitzenwerte der Oszillationsamplituden - kann es dabei zu Fehlmessungen durch inkorrekte Anvisierung und Abweichungen der Richtung der optischen Pulse vom eigentlich gewünschten Zielobjekt kommen. Ohne weiteres zutun kann ein Teil der bei der Messung herangezogenen Pulsinformationen daher gar nicht vom eigentlichen Zielobjekt herrühren. Beispielsweise können bei instabilitätsbedingtem, teilweisem Vorbeizielen der Entfernungsmessung die Pulsinformationen von einem anderen Objekt als dem eigentlichen Zielobjekt stammen oder gar keine Zielinformation enthalten und nur zusätzliches Rauschen einbringen. Dies beeinflusst die Signalqualität der ermittelten und zur Entfernungsbestimmung auszuwertenden Informationen, was zu ungenauen oder falschen Messwerten oder längeren Messzeiten führt. Beispielsweise tragen Lichtpulse, welche in ihrer Richtung am Zielobjekt vorbeigehen und somit nicht zurückgeworfen werden bzw. Lichtpulse welche von einem anderen Objekt im Vordergrund oder Hintergrund zurückgeworfen werden, bei einer erfindungsgemässen Mehrpulsmessung nicht wie vorgesehen zur Verbesserung des SNR (als einem Kennwert der Signalqualität der zur Entfernungsbestimmung herangezogene Information) durch Erhöhung des Signalterms bei, sondern verwischen die Form des Empfangsignals und/oder erhöhen vielmehr den Rauschterm und können somit sogar negative Auswirkungen auf die Entfernungsermittlung haben.

Die Vorschläge zur digitalen Bildstabilisierung aus dem Stand der Technik sind daher zur Lösung des eigentlichen Problems nicht direkt zielführend. Diese lösen nicht das eigentliche Problem bei der Entfernungs-Messung aufgrund von instabiler Handhaltung, sondern erhöhen mit der digitalen Bildstabilisierung lediglich den Beobachtungskomfort. Zugleich bringt diese Stabilisierung aber neue Probleme. Eine solches neues, stabilisierungsbedingtes Problem ist dabei das verschleiern der tatsächlichen momentanen Zielrichtung der Entfernungsmessung. Zudem bringt die oft propagierte elektronische Bildstabilisierung auch die obengenanten Nachteile der bei deren Realisierung erforderlichen elektronischen Beobachtung und der dabei nötigen elektronischen Gerätekomponenten mit sich, welche insbesondere bei Geräten für den militärischen oder für vergleichbare Einsätze unerwünscht sind.

Die vorliegende Erfindung kann beispielsweise auch zur Verbesserung eines klassischen Durchlicht-Beobachtungsgeräts mit Entfernungsmessfunktionalität angewandt werden, also auch bei einem Gerät ohne digitaler Bildverarbeitung des Beobachtungsbildes, also etwa bei energiesparenden, robusten Beobachtungsgeräte für einen rauen Feldeinsatz. Die dabei eigentlich angestrebte Verbesserung der Entfernungsmessung - also z.B. einer Erhöhung der Messgenauigkeit, Verkürzung der Messzeiten, Erweiterung des vom Gerät abdeckbaren Entfernungsmessbereichs und/oder einer Ermöglichung von Messungen unter widrigen Umständen, etc. - wird erfindungsgemäss robuster, einfacher und mit weniger technischem Aufwand angegangen.

Vereinfacht gesagt werden erfindungsgemäss die Spitzen oder Ausreisser der Oszillation einer instabilen Gerätelage während des Messzeitfensters vermieden, indem Informationen während der Zeiten, in welchen die Oszillation ausserhalb eines akzeptablen Bereichs liegen nicht ermittelt und/oder nicht zur Entfernungsbestimmung herangezogen werden.

Da speziell bei den geforderten, grossen Entfernungen zu natürlichen Zielen, welche es mit dem erfindungsgemässen Beobachtungsgerät zu ermitteln gilt, und unter den Randbedingungen wie Augensicherheit der Messstrahlung, beschränkte Emissionsleistung, etc. ist ein heranziehen von mehreren zurückgeworfenen Lichtpulsen zur Entfernungsbestimmung erforderlich. Die Signalinformation eines einzigen zurückgeworfenen Pulses reicht nur in den seltensten Fällen, speziell bei nahen und sehr gut reflektierenden Zielen ausreicht, um eine Entfernung mit hinreichender Genauigkeit und Sicherheit bestimmen zu können, jedoch wirkt sich die Raumlagenabweichung mit zunehmender Distanz stärker aus. Durch die erfindungsgemäss nötige Mindestanzahl an Pulsen erstreckt sich die Entfernungsbestimmung - auch wenn die Einzelpulse von zeitlich kurzer Dauer (etwa im Bereich von Mikrosekunden oder Nanosekunden) sind, doch über ein Zeitfenster, welches deutlich länger ist als ein Einzelpuls und durchaus bis zu einigen Sekunden dauern kann. Bei Einzelpulsmessungen wird also kein Zeitfenster der Entfernungsmessung definiert, sondern bei einer Messung mit einem einzigen Puls wird das Ziel entweder getroffen oder verfehlt - woraus sich eine gänzlich andere Problemstellung und Auswirkung auf das Messergebnis ergibt und weshalb Ansätze von Einzelpulsmessungen bei einem erfindungsgemässen Gerät nicht direkt anwendbar sind. Entsprechend der vorliegenden Erfindung wird die Entfernung durch Kumulation der Signalinformationen der einzelnen von Zielobjekt zurückkommenden Pulse bestimmt, wobei erfindungsgemäss Signale ohne bzw. mit potentiell falschem Entfernungs-Informationsgehalt vermieden werden.

Die Mindestanzahl ist dabei speziell grösser als 1, sodass es sich um eine so genannte Mehrpulsmessung handelt, speziell ist die Mindestanzahl beispielsweise grösser als 50 oder 100 Pulse, speziell in einer Grössenordnung von tausenden von Pulsen z.B. bis hin zu 30.000 oder 50.000 Pulsen oder gar mehr. Bei dem erfindungsgemässen Beobachtungsgerät kann dabei die Mindestanzahl als eine festgelegte Anzahl vorgegeben sein. Die Mindestanzahl kann auch dynamisch in Abhängigkeit einer Signalqualität des Empfangs bestimmt werden, beispielsweise wobei die Mindestanzahl als jene Anzahl von Pulsen definiert ist, bei welcher ein mindest-SNR-Grenzwert bei der Ermittlung der Entfernung erreicht ist. Auch kann eine Kombination aus einer vorgegebenen Mindestanzahl und dem Erzielen einer vorgegebenen Signalqualität angewandt werden. Zusätzlich kann auch eine definierte Maximalanzahl von Pulsen oder eine definierte Maximaldauer des Zeitfensters vorgegeben werden.

Der Bewegungssensor kann dabei in Form einer IMU aufgebaut sein, mit welcher eine Raumlage, bzw. eine Raumlagenabweichung des Beobachtungsgeräts detektierbar ist, vorzugsweise in zwei zumindest annähernd orthogonal zueinander stehenden Richtungen, sodass horizontale und vertikale Instabilitäten der Anzielung erfassbar bzw. herleitbar sind. Beispielsweise kann hierbei ein oder mehrere Gyroskope, Beschleunigungssensoren, Neigungssensoren oder eine Kombination dieser angewandt werden, speziell in kompakter MEMS-Bauweise. Beispielsweise kann ein Gyroskop horizontale Instabilitäten der Richtung der Zielachse erfassen und/oder es können ein oder mehrere horizontal und vertikal ausgewertete Beschleunigungssensoren genutzt werden. Dabei kann auch eine differenzielle Auswertung von Beschleunigungssensoren zur Bestimmung der herangezogen werden. Beispielsweise kann je ein im Bereich des Okulars und ein, in etwa diagonal gegenüberliegender, im Bereich des Objektivs angeordneter Beschleunigungssensors genutzt werden. Es können aber z.B. auch zumindest zwei Gyroskope bzw. ein mehrachsiges Gyroskop genutzt werden. Die Dreh- bzw. Schwenk- oder Schwank-Achse der Instabilität ist im Allgemeinen nicht per-se bekannt oder auch variierend. Erfindungsgemäss von primärer Bedeutung ist eine Bestimmung der Instabilität bezogen auf den Nullpunkt oder Ursprung der Entfernungsmessung, speziell die horizontale oder vertikale Winkelabweichung der Zielachse des Entfernungsmessers bzw. der Anzielung, also eine Erfassung von einer oder mehrerer physikalischen Grössen aus welchen diese abgleitet werden können.

Die Daten der Raumlage oder Raumlagedaten des Bewegungssensors repräsentieren also die Raumlage des Beobachtungsgeräts und somit jene der Richtung der Anzielung bzw. der Richtung in welche die Entfernungsmessung erfolgt. Dabei ist für die erfindungsgemässe Auswertung nicht zwingend eine absolute Raumlageninformation erforderlich, sondern es kann auch eine zeitliche Abweichung der Raumlage bzw. der Wechselanteil der Instabilität der Raumlage herangezogen werden, welcher jedoch z.B. auch entsprechend aufintegriert werden kann.

Das Beobachtungsgerät kann beispielsweise die Instabilität in Form einer Oszillation einer Raumrichtung der Anzielung erfassen. Dabei wird insbesondere eine Oszillation durch Instabilitäten bzw. Zitterbewegungen oder Tremor einer Handhaltung des Beobachtungsgeräts bestimmt. Dabei kann die Oszillation etwa durch ein analog oder digital erfasstes Ausgangssignal des Bewegungssensors abgeleitet werden, speziell des Wechselanteils in einem definierten Frequenzbereich, in welchem Instabilitäten einer Handanzielung üblicherweise auftreten, also z.B. etwa in einem Bereich von 0.5Hz bis 20Hz, speziell von ca. 2Hz bis 10Hz. Da eine Abweichung der Anzielung durch die Instabilitäten im Wesentlichen durch Abweichungen in zwei zueinander orthogonal liegenden Raumrichtungen (z.B. ein horizontales Schwanken und ein vertikales Schwanken der Zielachse des Geräts) beschrieben werden kann, wird die Instabilität insbesondere in zumindest zwei Raumrichtungen bestimmt, vorzugsweise zumindest annähernd vertikal und horizontal oder als Vektor in der Horizontal-Vertikal-Ebene.

Die Steuerung kann dabei anhand eines Kriteriums erfolgen, nach welchem zum Einbezug der Signalinformation ein zu dieser zeitlich zugehöriger, momentaner Oszillationswert in einem vorgegebenen Bereich um einen Zentralbereich der Oszillation liegt.

Das Kriterium kann ein zugehöriger Bewegungsdaten-Sensorwert oder eine davon abgeleitete Grösse, welche sich in einem vorgegebenen Bereich befindet sein. Das Kriterium kann dabei fix sein, durch den Benutzer vorgebbar sein oder sich dynamisch den Gegebenheiten der aktuellen Messung anpassen, z.B. indem ein zulässiger Bereich sich anhand eines Mittelwerts und/oder einer durchschnittlichen oder maximalen Abweichung der Raumlagedaten über einen vorgebenden Zeitbereich bestimmt. Das Kriterium kann dabei auch noch weitere Einflüsse mitberücksichtigen, wie etwaige Totzeiten, Wartezeiten, Einschwingvorgänge, etc.

Der Zentralbereich ist dabei jener Bereich der von der Anzielung erfasst werden soll, also ein definierter Sollbereich bzw. eine definierte Soll-Achse der Anzielung bzw. Entfernungsmessung zum Zielobjekt. Die Definition des Zentralbereichs erfolgt dabei durch die manuelle Auslösung der Entfernungsmessung, wobei nicht zwingend die exakt zum Auslösezeitpunkt vorliegende Raumlage sondern auch ein Wert oder Mittelwert vor oder nach der Auslösung herangezogen werden kann. Dies ist insbesondere interessant, da das manuelle Drücken eines Bedienknopfes am Beobachtungsgerät meist mit einer gewissen kurzzeitigen Erschütterung und somit einer Änderung der Raumlage des Beobachtungsgeräts verbunden sein kann, was zu unerwünschten Abweichungen der Anzielung des Zentralbereichs führen würde.

Der Zentralbereich der Oszillation kann z.B. ein Mittelwert der Bewegung über einen definierten Zeitraum vor oder nach einem Zeitpunkt der Betätigung des Auslösers bestimmt werden. Die Betätigung des Auslösers löst also nicht zwingend instantan den Beginn des Zeitfensters der Entfernungsmessung aus, sondern kann den Beginn des Zeitfensters auch zeitlich verzögert bedingen, beispielsweise nach einer Wartezeit in welcher allfällig durch die Betätigung hervorgerufene Gerätebewegungen abgeklungen sind, was etwa durch eine definierte Wartezeit vorgegeben oder anhand der Daten des Bewegungssensors ermittelt werden kann.

Zur Bestimmung des Zentralbereichs können dabei also Raumlagedaten des Bewegungssensors über einen Zeitbereich vor der Auslösung gemittelt werden, da ein Mittelwert der Instabilitäten der Anzielung im allgemeinen im wesentlichen der gewünschten Anzielung entspricht. Unter Mittelwert ist in diesem Zusammenhang nicht nur ein linear gebildeter Mittelwert aus den über den Zeitbereich erfassten Raumlagedaten zu verstehen, es kann z.B. auch ein quadratischer Mittelwert oder eine statistische Kenngrösse, eine Tiefpassfilterung, etc. der zum Zentralbereiche der Anzielung gehörenden Bewegungssensordaten angewandt werden.

Da die Betätigung des Auslösers, etwa durch einen Fingerdruck der haltenden Hand, vielfach ein Auslöser für zusätzliche Instabilitäten der Raumlage des Beobachtungsgeräts ist, kann die Bildung des Mittelwerts vor bzw. nach einem Zeitbereich der Auslösung erfolgen. Um bei einer Mittelwertbestimmung vor der Auslösung nicht präventiv fortlaufend den Mittelwert bestimmen zu müssen, kann die Mittelwertbestimmung z.B. durch ein antippen des Auslösers vor der eigentlichen Betätigung des Auslösers hervorgerufen werden.

Der vorgegebene Bereich um den Zentralbereich der Oszillation kann in dynamischer oder statistischer Abhängigkeit von einer Amplitude der Oszillation festgelegt werden. Zum Beispiel kann ein vom Benutzer festlegbarer Prozentsatz eines Maximalwerts der Amplitude der Oszillation über eine definierten Zeitraum als Bereich um den Zentralbereich, in welchem Pulse zur Mindestanzahl zählen, definiert sein, oder es kann ein vorgegebener Prozentsatz eines Mittelwerts oder einer statistischen Kenngrösse (wie der Standardabweichung, ...) der Amplitude der Oszillation zur statischen oder dynamischen Festlegung des Bereichs um den Zentralbereich angewandt werden.

Zur Festlegung der bei der Distanzbestimmung einbezogenen Mindestanzahl der Pulse anhand eines vorgegebenen Kriteriums der Raumlage, wird die Steuerung abhängig von den Raumlagedaten des Bewegungssensors die Sendeeinheit derart angesteuert, dass die Aussendung der Pulse der optischen Strahlung nur in einem definierten Richtungsbereich um das angezielte Zielobjekt erfolgt, speziell also nur in dem vorgegebnen Bereich um den Zentralbereich. Diese Art von senderseitiger Selektion kann z.B. bezüglich des Energieverbrauchs vorteilhaft sein, da nur dann Energie für das Aussenden der Pulse verbraucht wird, wenn deren Signalinformation auch tatsächlich zur Ermittlung der Entfernung zum angezielten Zielobjekt einen konstruktiven Beitrag leisten kann. Das Zeitfenster, welches die Ermittlung der Entfernung benötigt, speziell also jener Teil der Entfernungsermittlung in welchem optische Signale ausgesendet oder empfangen werden, ist dabei länger als ein Einzelpuls und entsprechend der vorliegenden Erfindung potentiell auch länger als jene Zeit die zur kontinuierlichen Emission der Mindestanzahl der Pulse mindestens nötig wäre, da erfindungsgemäss - ausser bei hinreichend stabiler Gerätehaltung - nicht alle der potenziell ermittelbaren Signalinformationen zur Ermittlung der Entfernung herangezogen werden, sondern nur jene, welche auch das Kriterium hinsichtlich der jeweils zugehörigen Raumlagedaten erfüllen. Die Zugehörigkeit der Raumlagedaten ist dabei zeitlich bedingt und kann auch allfällige Verzögerungszeiten von Sende-, Empfangs- oder Auswerteinheit bzw. den darin verwendeten Komponenten berücksichtigen.

Die Steuerung abhängig von den Raumlagedaten des Bewegungssensors kann aber auch die Empfangseinheit derart ansteuern, dass der Empfang nur für die aus einem definierten Richtungsbereich um das angezielte Zielobjekt zurückgeworfenen Anteilen der optischen Strahlung erfolgt. Dabei erfolgt so zu sagen eine empfängerseitige Selektion der Pulse welche zur Mindestanzahl zählen. Dies kann z.B. vorteilhaft sein, um die Laseransteuerung für die Pulsemission unter konstanten Bedingungen betreiben zu können, z.B. indem während des Zeitfensters mit einer konstanten Pulsrate emittiert wird. Beispielsweise kann in der Empfangseinheit ein Verstärker, ein homodynes oder heterodynes Mischsignal oder ein ADC gesteuert werden.

Damit kann eine Kombination von der oben beschriebenen Sender- und Empfängerseitigen Selektion der Pulse, welche zur Ermittlung der Entfernung herangezogen werden durchgeführt werden, was z.B. den Energieverbrauch der Entfernungsmessung weiter reduzieren kann.

Alternativ oder zusätzlich kann die Steuerung abhängig von den Raumlagedaten des Bewegungssensors auch die Auswerteeinheit derart ansteuern, dass die Ermittlung der Entfernung nur unter Einbezug von aus einem definierten Richtungsbereich um das angezielte Zielobjekt zurückgeworfenen Anteilen der optischen Strahlung erfolgt, also quasi eine Auswerteseitige Selektion der zur Mindestanzahl zählenden Pulse, welche zur Ermittlung der Entfernung herangezogen werden. Dabei kann während des Zeitfensters ein Speicher der Auswerteeinheit die Signalinformationen und die zeitlich zum Aussenden und/oder Empfangen zugehörenden Raumlagedaten aufzeichnen. Die Ermittlung der Entfernung erfolgt in Folge oder parallel mit einer raumlagedatenabhängigen Richtungsbewertung der Signalinformationen der Pulse.

Bei einer Kombination von sender-, empfänger- und auswerteseitiger Festlegung jener Pulse, welche zur Mindestanzahl zählen, kann zum einen der Energieverbrauch des EDM minimiert werden und zum anderen kann beispielsweise die Ermittlung der Entfernung mit einer Reihung des Einbezugs der Pulse anhand deren zeitlich zugehörigen Raumlagedaten erfolgen. Somit kann z.B. bei fortlaufender Bestimmung oder Abschätzung des bei der Entfernungsbestimmung erzielten SNR - nach Einbezug der besten Pulse und erreichen eines hinreichenden SNR zur zuverlässigen und genauen Entfernungsbestimmung - die Ermittlung der Entfernung abgebrochen werden.

Das Beobachtungsgerät kann insbesondere einen Durchlichtpfad von einem Objektiv zu einem Okular als Beobachtungspfad aufweisen. Speziell kann es sich dabei um einen unstabilisierten Durchlichtpfad handeln, welcher ein unstabilisiertes Beobachtungsbild im Okular bereitstellt. Falls eine Stabilisation des vom erfindungsgemässen Beobachtungsgerät bereitgestellten Beobachtungsgeräts erfolgt, so geschieht dies insbesondere unabhängig von einer erfindungsgemässen Entfernungsmessung - es werden also speziell keine Informationen über eine Bildstabilisierung bei der erfindungsgemässen Entfernungsmessung einbezogen (bzw. ist dies nicht erforderlich). Beispielsweise kann bei einem unstabilisierten Durchlichtpfad auch eine optische Stabilisation des Beobachtungsbildes mittels Bewegung oder Verformung von optischen Elementen erfolgen, sodass auch ohne Versorgung mit elektrischer Energie die Grundfunktion einer klassischen Durchlicht-Beobachtung durchführbar ist.

Das erfindungsgemässe Beobachtungsgerät kann weiters ausgebildet sein mit:
▪ Einer Visiereinrichtung im Beobachtungspfad des Beobachtungsgeräts, durch welche eine Richtung der Anzielung definiert ist, beispielsweise ein Fadenkreuz oder dergleichen.
▪ Einem Restlichtverstärker, insbesondere einem analogen Restlichtverstärker, welcher Nachtbeobachtungen oder Beobachtung bei widrigen Lichtverhältnissen ermöglicht.
▪ Einer Einblendung von Displaybildern in den Beobachtungspfad (bzw. eine Einspiegelung einer Anzeige in das Okular), beispielsweise zur Anzeige der vom Entfernungsmesser bestimmten Messwerten, von geographischen Informationen, etc.
▪ Einer Ableitung von Kamerabildern aus dem Beobachtungspfad (bzw. einer Ausspiegelung von Bildern aus dem Objektiv), beispielsweise auf ein Daylight- oder Lowlight-CMOS-Bildsensor oder einen Thermal-Imager, zur Fernüberwachung oder zur Dokumentation der Beobachtung durch Bild- oder Videoaufzeichnung.
▪ Einer Neigungsbestimmungseinheit, zur Bestimmung eines Neigungswinkels gegenüber der Horizontalen und/oder Vertikalen. Insbesondere kann diese, oder Teile davon gegebenenfalls auch als Bewegungssensor im Sinne der vorliegenden Erfindung genutzt werden.
▪ Einer Nordrichtungsbestimmungseinheit, z.B. anhand des magnetischen Nordpols, anhand des Erdrotationsvektors, anhand von Sternbildern etc. Insbesondere kann diese oder Teile davon (z.B. ein Gyroskop einer Erdrotationsvektorbestimmung) gegebenenfalls auch als Bewegungssensor im Sinne der vorliegenden Erfindung genutzt werden.
▪ Einer Winkelmesseinheit zur Bestimmung einer Ausrichtung des Beobachtungsgeräts gegenüber einer feststehenden Basis in ein oder zwei Richtungen.
▪ Einer geographischen Koordinatenbestimmungseinheit, z.B. anhand von Sateliten, Funkfeuern, Sternbildern, etc.

Obige erweiternde Zusätze können fix im Beobachtungsgerät eingebaut oder modular zu- oder angesteckt werden.

Insbesondere bei der Neigungsbestimmungseinheit, Winkelmesseinheit und/oder Nordrichtungsbestimmungseinheit kann ebenfalls eine Steuerung einer Erfassung von deren Daten anhand der vorgegebenen Kriterien, welche bei den Pulsen der Entfernungsmessung angewandt werden, erfolgen.

Anders gesagt betrifft die Erfindung ein Entfernungsmessverfahren mit einem handhaltbaren entfernungsmessenden Beobachtungsgerät mit einem Anzielen eines Zielobjekts mit einem Beobachtungspfad, insbesondere einem optischen Durchlichtpfad von einem Objektiv zu einem Okular des Beobachtungsgeräts, und einem Auslösen einer Entfernungsmessung in Richtung der Anzielung durch manuelles Betätigen eines Auslösers, welche ein Beginnen des Zeitfensters der Entfernungsmessung bedingt.

Die Entfernungsmessung erfolgt mit:
▪ einem Aussenden einer zeitlichen Folge von Pulsen von amplitudenmodulierter optischer Strahlung, in Richtung der Anzielung, mit einer Sendeeinheit,
▪ einem Empfangen eines Anteils der optischen Strahlung, welcher von Zielobjekt zurückgeworfen wird, mit einem photosensitiven elektrischen Bauelement und einem Ermitteln einer Signalinformation der empfangenen optische Strahlung, mit einer Empfangseinheit, und
▪ einem Ermitteln einer Entfernung zum Zielobjekt auf Basis einer Signallaufzeit zwischen Aussenden und Empfangen der optischen Strahlung, mit einer elektronischen Auswerteeinheit.

Das Ermitteln der Entfernung erfolgt dabei mit einem Einbeziehen der Signalinformation von einer bestimmten Mindestanzahl von Pulsen, welche Mindestanzahl eine Mindestlänge eines Zeitfensters der Entfernungsmessung definiert. Dabei wird ein Erfassen einer Instabilität einer Raumlage des Beobachtungsgeräts mit einem Bewegungssensor durchgeführt und mit einer Ansteuerungseinheit erfolgt ein Steuern der Entfernungsmessung anhand von Raumlagedaten des Bewegungssensors derart, dass die zur Mindestanzahl zählenden Pulse vorgegebene Kriterien hinsichtlich diesen zeitlich zugeordneten Raumlagedaten erfüllen.

Dabei kann das erfindungsgemässe Entfernungsmessverfahren mit einem Vorgeben einer festgelegten Anzahl für die Mindestanzahl erfolgen. Diese kann Fest im Gerät programmiert oder vom Benutzer selektierbar sein. Es kann auch ein dynamisches Bestimmen der Mindestanzahl in Abhängigkeit einer Signalqualität des Empfangens erfolgen, bei dem die Mindestanzahl in Abhängigkeit einer Kenngrösse für die Güte der aktuellen Entfernungsmessung vorgegeben wird. Beispielsweise kann ein Erreichen eines mindest-SNR-Grenzwerts bei der Ermittlung der Entfernung die Mindestanzahl definieren, also bei gutem SNR der Messung die Mindestanzahl geringer ausfallen als bei schlechtem. Es kann auch eine Kombination aus einer Zahlenwertvorgabe und einer dynamischen Vorgabe der Mindestanzahl angewandt werden, z.B. eine fixe Untergrenze und ein dynamische Erhöhung der Mindestanzahl um eine Schrittweite in Abhängigkeit eines Kennwerts des Messergebnisses.

Das Erfassen der Instabilität kann als ein Erfassen einer Oszillation einer Raumrichtung der Anzielung erfolgen, insbesondere als einer Oszillation durch Zitterbewegungen einer Handhaltung des Beobachtungsgeräts. Dabei kann das Steuern anhand eines Kriteriums erfolgen, nach welchem zum Einbeziehen der Signalinformation ein zu dieser zeitlich zugehöriger, momentaner Oszillationswert in einem vorgegebenen Bereich um einen Zentralbereich der Oszillation liegt. Hierbei kann ein Bestimmen des Zentralbereichs als Mittelwert der Oszillation über einen definierten Zeitraum vor oder nach einem Zeitpunkt der Betätigung des Auslösers erfolgen.

Das Steuern erfolgt wie bereits beschrieben derart, dass:
▪ das Aussenden der Pulse nur in einem definierten Richtungsbereich um das angezielte Zielobjekt erfolgt, und kann wie bereits beschrieben derart erfolgen, dass auch
▪ das Empfangen nur für aus einem definierten Richtungsbereich um das angezielte Zielobjekt zurückgeworfenen Anteilen der optischen Strahlung erfolgt und/oder
▪ das Ermitteln der Entfernung nur unter Einbezug von aus einem definierten Richtungsbereich um das angezielte Zielobjekt zurückgeworfenen Anteilen der optischen Strahlung erfolgt.

Die Erfindung betrifft auch ein Computerprogrammprodukt mit Programmcode, der auf einem maschinenlesbaren Träger gespeichert ist, oder ein Computer-Daten-Signal, verkörpert durch eine elektromagnetische Welle, zur Durchführung des obigen Verfahrens. Dabei kann der Programmcode speziell das Ermitteln einer Entfernung zum Zielobjekt und das Steuern einer Pulsaussendung der Entfernungsmessung anhand von Raumlagedaten des Bewegungssensors durchführen. Der Programmcode zur Ausführung von unterschiedlichen Teilen des Verfahrens kann dabei auch über mehrere Prozessoren oder Mikrocontroller verteilt sein, welche im optoelektronischen Entfernungsmessers in einem erfindungsgemässen Beobachtungsgerät als Auswerteeinheit und/oder Ansteuerungseinheit oder Teilen davon ausgebildet sind.

Das erfindungsgemäße Verfahren und die erfindungsgemäße Vorrichtung werden nachfolgend anhand von in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:
Fig. 1 ein beispielhaftes vereinfachtes Block-Schema einer erste Ausführungsform eines erfindungsgemäßen Beobachtungsgeräts;
Fig. 2 eine erste beispielhafte Darstellung eines Anwendungsfalls eines erfindungsgemäßen Beobachtungsgeräts;
Fig. 3 eine zweite beispielhafte Darstellung eines Anwendungsfalls eines erfindungsgemäßen Beobachtungsgeräts;
Fig. 4 eine erste Darstellung eines beispielhaften Graphen einer Instabilität der Raumlage eines erfindungsgemäßen Beobachtungsgeräts;
Fig. 5 eine Darstellung einer beispielhaften, durch die Instabilität hervorgerufenen Abweichung der Entfernungsmessung am Zielobjekt;
Fig. 6 eine Darstellung einer beispielhaften, vereinfachten Wahrscheinlichkeitsverteilung einer Anzielung bei einer Handhaltung eines erfindungsgemässen Beobachtungsgeräts;
Fig. 7 eine dritte beispielhafte Darstellung eines Anwendungsfalls eines erfindungsgemäßen Beobachtungsgeräts;
Fig. 8 eine zweite Darstellung eines beispielhaften Graphen einer Instabilität der Raumlage eines erfindungsgemäßen Beobachtungsgeräts;
Fig. 9 eine Darstellung eines ersten beispielhaften Signalverlaufs einer erfindungsgemäßen Ausführungsform einer Entfernungsmessung mit einem Beobachtungsgerät mit instabiler Raumlage;
Fig. 10 eine Darstellung eines zweiten beispielhaften Signalverlaufs einer erfindungsgemäßen Ausführungsform einer Entfernungsmessung mit einem Beobachtungsgerät mit instabiler Raumlage;
Fig. 11 eine Darstellung eines dritten beispielhaften Signalverlaufs einer erfindungsgemäßen Ausführungsform einer Entfernungsmessung mit einem Beobachtungsgerät mit instabiler Raumlage;
Fig. 12a eine Darstellung eines Blockschemas einer ersten Ausführungsform einer erfindungsgemäßen Entfernungsmessung mit einem Beobachtungsgerät mit instabiler Raumlage;
Fig. 12b eine Darstellung eines Blockschemas einer Entfernungsmessung, die nicht Teil der Erfindung ist, mit einem Beobachtungsgerät mit instabiler Raumlage;
Fig. 12c eine Darstellung eines Blockschemas einer Entfernungsmessung, die nicht Teil der Erfindung ist, mit einem Beobachtungsgerät mit instabiler Raumlage;
Fig. 13a eine Darstellung eines Beispiels eines ersten Beobachtungsbilds einer Ausführungsform eines Beobachtungsgeräts mit einer erfindungsgemäßen Entfernungsmessung;
Fig. 13b eine Darstellung eines Beispiels eines zweiten Beobachtungsbilds einer Ausführungsform eines Beobachtungsgeräts mit einer erfindungsgemäßen Entfernungsmessung.

Die Darstellungen in den Figuren dienen lediglich zur Illustration und sind nicht als maßstäblich zu betrachten. Die dargestellten Signalverläufe sind beispielhaft zur Illustration der Erfindung und können von praktisch ermittelten Kurven von Messwerten abweichen.

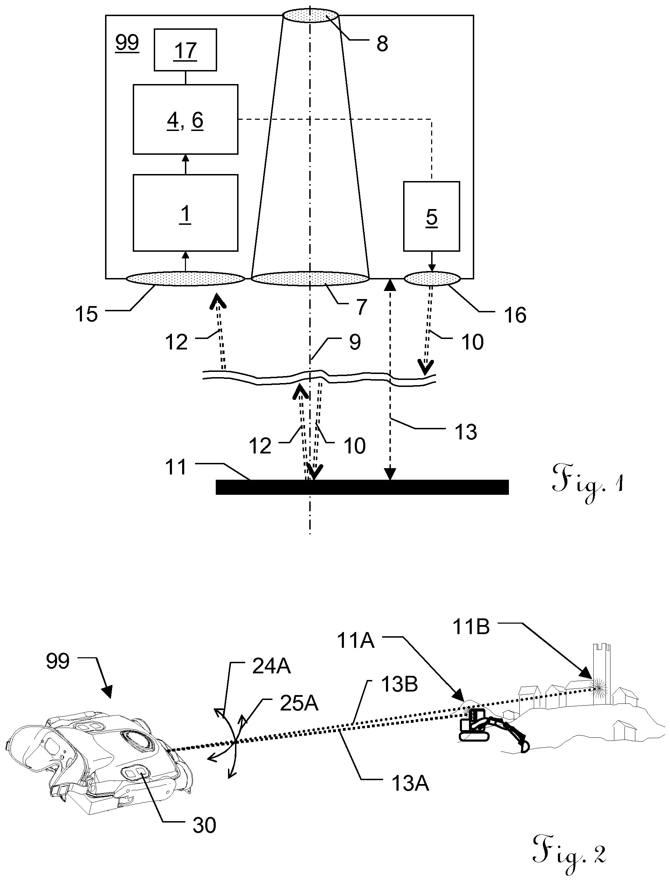

**Fig. 1** zeigt eine Ausführungsform eines erfindungsgemäßen Beobachtungsgeräts 99 mit optoelektronischem Distanzmessers als vereinfachtes Blockdiagramm. Es kann sich dabei beispielsweise um ein Beobachtungsgerät 99 handeln, welches zum Anzielen und Bestimmen von Zielkoordinaten eines Zielobjekts 11 benutzt werden kann, und welches einen eingebauten, batterie- bzw. akkubetriebenen Entfernungsmesser aufweist. Die Beobachtung und Anzielung des Zielobjekts 11 erfolgt in der gezeigten Ausführungsform über einen Durchlichtkanal mit einem Okular 8 und einem Objektiv 7, dessen optische Achse 9 als Anzielachse der Beobachtung dargestellt ist. Die Anzielachse 9 entspricht dabei der Richtung in welcher die Entfernungsmessung erfolgt. Der Durchlichtpfad kann auch noch weitere, hier nicht dargestellte optische Elemente, wie Umlenkspiegel, Linsen, optische Filter, Oberflächenbeschichtungen, Fadenkreuze, Prismen, Einkoppelspiegel, Auskoppelspiegel, etc. aufweisen.

Im Blockschema ist eine biaxiale Ausführungsform des Entfernungsmessers gezeigt, bei welcher das Aussenden und der Empfangen von optischer Entfernungsmessstrahlung 10,12 über jeweils dedizierte Sendeoptiken 16 und Empfangsoptiken 15 erfolgen, welche beide getrennt vom Objektiv 7 der Beobachtung sind. Die Strahlengänge der Sende- und Empfangsentfernungsmessstrahlung 10,12 (also deren optische Achsen) sind meist derart ausgerichtet, dass diese als annähernd koaxial oder parallel zueinander angesehen werden können bzw. sich diese in einer vorgegebenen Distanz schneiden. Das Zielobjekt 11 ist - wie durch die Bruchlinien angedeutet - aus Platzgründen in der Darstellung unproportional nahe zum Gerät 99 gezeichnet. Bei praktischen Beobachtungen ist das Zielobjekt 11 meist zig Meter bis Kilometer entfernt. In einer anderen erfindungsgemässen Ausführungsform kann der Strahlengang des Aussendens und/oder Empfangens der Entfernungsmessstrahlung zumindest teilweise über das Objektiv 7 zur Beobachtung erfolgen, also die Entfernungsmessung oder Teile dieser koaxial zur Beobachtung erfolgen, was beispielsweise durch ein Einspiegeln des Sendestrahls 10 in den Bereich des Zentrums der Beobachtungsoptik 7 und/oder ein Ausspiegeln des Empfangsstrahls 12 realisiert werden kann. In einer anderen Ausführungsform kann der Beobachtungspfad auch zumindest teilweise digital ausgebildet sein, z.B. wobei das Objektiv 7 mit einem elektronischen Bildaufnahmesystem und/oder das Okular 8 mit einer elektronischen Anzeigeeinheit ausgebildet ist.

In der rechten Hälfte des Blocks 99 ist die Sendeeinheit 5 des Distanz- oder Entfernungsmessers und in der linken Hälfte die Empfangseinheit 1 dargestellt. Die hier beschriebene Trennung der beiden Einheiten ist dabei primär funktionell zu sehen. Teile der beiden Einheiten können z.B. auch auf einer gemeinsamen Leiterplatte untergebracht sein. Das Zielobjekt 11, dessen Entfernung oder Distanz 13 zu bestimmen ist, wirft zumindest einen Teil der von der Sendeeinheit 5 emittierten elektromagnetischen Strahlung 10 als Empfangsstrahlung 12 zur Empfangseinheit 1 zurück. Ein Teil der emittierten Strahlung kann dabei optional auch als Referenzstrahl über einen hier nicht dargestellten Referenzpfad bekannter Länge zur Empfangseinheit 1 oder einem dedizierten Referenzempfänger geführt werden. Die gezeigte Blockdarstellung des internen Aufbaus des Entfernungsmessers dient primär zur Erläuterung der Funktionsweise und kann in praktischen Ausführungsformen auch variiert werden kann.

Die Sendeeinheit 5 weist in einer Ausführungsform z.B. eine Treiberstufe auf, welche elektrische Signale zur Ansteuerung eine lichtemittierenden Komponente 6 zur Generierung der elektromagnetischer Strahlung 10 bereitstellt. Als Lichtemitter 6 können beispielsweise Halbleiterlichtquellen, wie Halbleiterlaser oder Leuchtdioden(LED), halbleitergepumpte Laser oder auch andere Lichtquellen eingesetzt werden. Das emittierte Licht ist durch eine Optik 16 zu einem gerichteten Strahl 10 mit geringer Divergenz kollimiert, welcher in Richtung der Anzielung 9 ausgesendet wird. Die Treiberstufe ist dabei den Emissionscharakteristiken der Lichtquelle angepasst, um die intensitätsmodulierte optische Sendestrahlung 10 zu erzeugen, welche in Form von optischen Pulsen abgegeben wird. Dabei kann neben des Emissionszeitpunkts auch die Intensität und die Pulsdauer der emittierten Lichtsignale 10 von der Auswerteeinheit 4 vorgegeben werden, beispielsweise in mehreren diskreten Stufen oder auch kontinuierlich variierbar.

Die Auswerteeinheit 4 kann in der gezeigten Ausführungsform sowohl der Sende- als auch der Empfangseinheit zugerechnet werden und steuert die Abläufe zur Bestimmung der Distanz. Die Auswerteeinheit 4 kann beispielsweise ein oder mehrere entsprechend programmierte Digitalrechner, wie etwa ein Mikroprozessor, DSP, FPGA, ASIC, etc. aufweisen. Da das Beobachtungsgerät zur Handhaltung ausgelegt ist, kann die Spannungsversorgung des Distanz- oder Entfernungsmessers über Batterien, Akkus oder andere geräteinterne oder externe elektrische Energiequellen erfolgen.

Die Empfangseinheit 1 wandelt vom Zielobjekt 11 zurückgeworfene, empfangene elektromagnetische Strahlung 12 mit einem Empfangselement in ein elektrisches Signal um. Der Empfänger der optischen Strahlung 12 kann als Empfangselement eine Photodiode verwenden, beispielsweise eine PIN- oder eine Avalanche-PhotoDiode (APD) mit entsprechender Vorspannung. Das resultierende elektrische Signal wird infolge für die Weiterverarbeitung noch entsprechend konditioniert, beispielsweise durch ein Impedanzwandeln, Filtern, Verstärken, Bandbegrenzen, heterodynes oder homodynes Mischen, Analog-Digital-Wandeln, etc.

Daraufhin wird die Signalinformation des empfangenen Signals von der Auswerteeinheit 4 verarbeitet um die Entfernung anhand der Laufzeit von einer Mehrzahl der Emittierten und vom Zielobjekt zurückgeworfenen optischen Pulse zu bestimmen. Durch die Kumulation der Signalinformationen von mehreren Pulsen kann dabei das Signal-Rausch-Verhältnis (SNR) verbessert werden, insbesondere da sich unkorrelierte Rauschterme ausgleichen und die korrelierten Entfernungsinformationen sich summieren.

Das gezeigte, handhaltbare Beobachtungsgerät 99 mit einem optischen Durchlichtpfad von einem Objektiv 7 zu einem Okular 8 zur optischen Anzielung eines Zielobjekts 11 in einer Anzielrichtung 9 weist also einen optoelektronischen Entfernungsmesser zur Entfernungsmessung in die Richtung 9 der Anzielung auf. Der Entfernungsmesser hat eine Sendeeinheit 5 zur Aussendung einer zeitlichen Folge von Pulsen optischer Strahlung 10, insbesondere in Form einer kollimierten Laserzielachse und eine Empfangseinheit 1 zum Empfang eines vom Zielobjekt 11 zurückgeworfenen Anteils 12 der optischen Strahlung 10. Mit der elektronischen Auswerteeinheit 4 des Entfernungsmessers 99 ist somit auf Basis einer Signallaufzeit zwischen Aussendung und Empfang der optischen Strahlung 10 und 12 eine Entfernung 13 zum Zielobjekt 11 ermittelbar. Die Ermittlung der Entfernung 13 erfolgt dabei unter Einbezug einer Mehrzahl von Pulsen, welche ein Zeitfenster der Entfernungsmessung definieren. Abhängig von einer Betätigung eines Auslösers des Beobachtungsgeräts wird dabei ein Beginn des Zeitfensters der Entfernungsmessung bedingt.

Das Beobachtungsgerät hat weiters einen Bewegungssensor 17, insbesondere eine Inertialmesseinheit, speziell in Form eines oder mehrerer Beschleunigungssensoren und/oder Gyroskopen, zur Erfassung einer Instabilität einer Raumlage des Beobachtungsgeräts 99 in Form von Raumlagedaten. Eine Ansteuerungseinheit 6 des Entfernungsmessers, welche auch mit der Auswerteeinheit zusammengefasst werden kann, ist dabei derart ausgebildet, dass bei der Entfernungsmessung während des Zeitfensters nur Signalinformationen von einer solchen Mehrzahl von Pulse herangezogenen werden, bei welchen zeitlich zu den Pulsen zugehörige Raumlagedaten des Beobachtungsgeräts 99 vorgegebenen Kriterien entsprechen.

Der Bewegungssensor 17 kann beispielsweise auch für weitere Funktionen des Beobachtungsgeräts, wie Beispielsweise einer Anzielrichtungsbestimmung verwendet werden. Die Raumlagedaten des oder der Bewegungssensoren 17 sind dabei derart, dass daraus eine Abweichung der Anzielrichtung 9 bestimmbar ist.

Eine erfindungsgemäße Mehrpulsmessung ohne eine erfindungsgemäße Messpulsselektion würde anders ausgedrückt, aufgrund der Instabilitäten der Raumlage, zu einer Entfernungsmessung in Form einer Punktwolke in einem Bereich des bzw. um das Zielobjekt führen, bzw. zu einer Entfernungsbestimmung hin zu einem Mittelwert einer solchen Punktwolke. Dies würde jedoch zu einer Verschlechterung der Messergebnisse bzw. zu ungenauen oder falschen Messungen führen und nicht zu der mit der Mehrpulsmessung angestrebten Verbesserung des Signal-Rausch-Verhältnisses - also nicht den gewünschten Effekt erzielen oder gar kontraproduktiv sein. Mit steigenden Entfernungen tritt dieser Effekt vermehrt auf, sodass bei der Anwendung gattungsgemässer handhaltbarer Beobachtungsgeräten 99 mit den dabei üblichen, grossen Entfernungen von über hundert Metern oder darüber, diesbezügliche Probleme deutlicher in Erscheinung treten als z.B. bei handgehaltenen Entfernungsmessern zur Innenraumvermessung auf Distanzen unter hundert Metern.

**Fig. 2** zeigt einen beispielhaften Einsatz eines erfindungsgemäßen Beobachtungsgeräts 99 mit Entfernungsmesser (EDM), welches zur Anzielung eines Zielobjekts 11A und Bestimmung dessen Distanz 13A zum Beobachter eingesetzt wird. Das Beobachtungsgerät 99 hat dabei eine Beobachtungsrichtung, welche mit der Messrichtung der Distanzmessung übereinstimmt, sodass mit dem Entfernungsmesser eine Distanz zu einem bei der Beobachtung anvisierten Zielpunkt 11A ermittelt werden kann.

Mit dem gezeigten Beobachtungsgerät 99 soll hier eine Distanz 13A zu dem Fahrzeug 11A als Zielobjekt unter Emission von Lichtpulsen und Bestimmung derer Laufzeit ermittelt werden. Dazu hält der Benutzer das Beobachtungsgerät 99 und zielt mit dessen, meist vergrössernden, Durchlichtkanal das Zielobjekt 11A an und betätigt den Auslöser 30 um eine Entfernungsmessung auszulösen. Damit wird ein Zeitfenster der Messung geöffnet. Im Zeitfenster werden Signalinformationen von einer Mehrzahl von vom Zielobjekt zurückgeworfenen Pulsanteilen kumuliert um daraus die Distanz zu ermitteln. Das Ende des Zeitfensters kann beispielsweise durch ein Erreichen einer vorgegebenen Mindestanzahl von zu kumulierenden Pulsen oder bei erreichen einer Mindestanzahl von Pulsen bei welcher hinreichenden SNR-Schwelle der kumulierten Information erzielt wird oder anhand einer vorgegebnen zeitlichen Messdauer definiert werden. Die ermittelte Entfernungsinformation wird daraufhin dem Benutzer oder einer Datenverarbeitungseinheit zur Weiterverarbeitung bereitgestellt. Dabei kann neben einer Angabe der ermittelten Entfernung in einem Display auch eine graphische oder numerische Angabe der zur Entfernungsmessung zugehörenden Raumlagengenauigkeit erfolgen, beispielsweise auch gemeinsam mit einer Genauigkeitsschätzung der Entfernung. Dies kann beispielsweise numerisch oder graphisch erfolgen.

Die beschränkte Stabilität der Gerätehaltung von handgehaltenen Beobachtungsgeräten mit Distanzmessfunktionalität beschränkt den als sinnvoll zu erachtenden Distanzmessgenauigkeitsbereich. Eine Distanzmessung auf Millimeter-Genauigkeit macht mit einem handgehaltenen Beobachtungsgerät wenig Sinn, besonders bei Messdistanzen im Bereich von mehreren hundert Metern oder einigen Kilometern. Ein vergrößerndes Beobachten und Vermessen von weit entfernten Zielen ist eine häufige Aufgabe, welche von derartigen handgehaltenen Geräten zu erfüllen ist. In den Anwendungsgebieten gattungsgemässer Beobachtungsgeräte 99 ist eine große Messreichweite, welche eine Beobachtung und Vermessung aus einem größeren Abstand von einer Gefahrenzone ermöglicht, gegenüber einer höchstpräzisen Vermessung vorzuziehen. Beispiele hierfür können z.B. Jagdeinsätze, Militär- oder Polizei-Operationen, Landmarken-Navigation von Fußgängern, Land-, Luft- oder Wasserfahrzeugen, etc. sein.

Jedoch ist die korrekte Anzielung des Zielobjekts 11A und dessen zuverlässige Vermessung von Bedeutung. Durch die Instabilität 24A,25A der Gerätehaltung weist die Anzielung während des Zeitfensters nicht immer auf das Zielobjekt 11A. Speziell bei grösseren Zielentfernungen bewirken Winkelabweichungen 24,25 der Gerätehaltung in der Grössenordung von nur wenigen Winkelsekunden durchaus eine Abweichung des angezielten Punktes auf dem Ziel in einer Grössenordnung von Metern. Dies bedeutet z.B. in der gezeigten Abbildung, dass die Messrichtung nicht in Richtung 13A des gewünschten Zielobjekts 11A sondern in Richtung 13B des unerwünschten Ziels 11B weist. Vom unerwünschten Ziel 11B zurückgeworfene Anteile tragen jedoch nicht zur Vermessung des Zielobjekts 11A bei, sondern verfälschen die Messung, machen Sie mehrdeutig oder mit grösseren Unsicherheiten behaftet, verschlechtern das SNR oder machen eine Distanzermittlung durch die Auswerteeinheit gänzlich unmöglich. Es kann sogar vorkommen, dass das Beobachtungsgerät dem Benutzer die Entfernung 13B zum Objekt 10B ausgibt, obwohl der Benutzer in gutem Glauben das Zielobjekt 11A angezielt hatte, und entsprechend annimmt diese Distanz zu messen. Insbesondere wenn ein solcher Fehler auf eine zufällig ungünstige Korrelation der Pulsemission mit der Instabilität zurückzuführen ist, kann ein solcher Fehler für den Benutzer in keinster Weise ersichtlich sein.

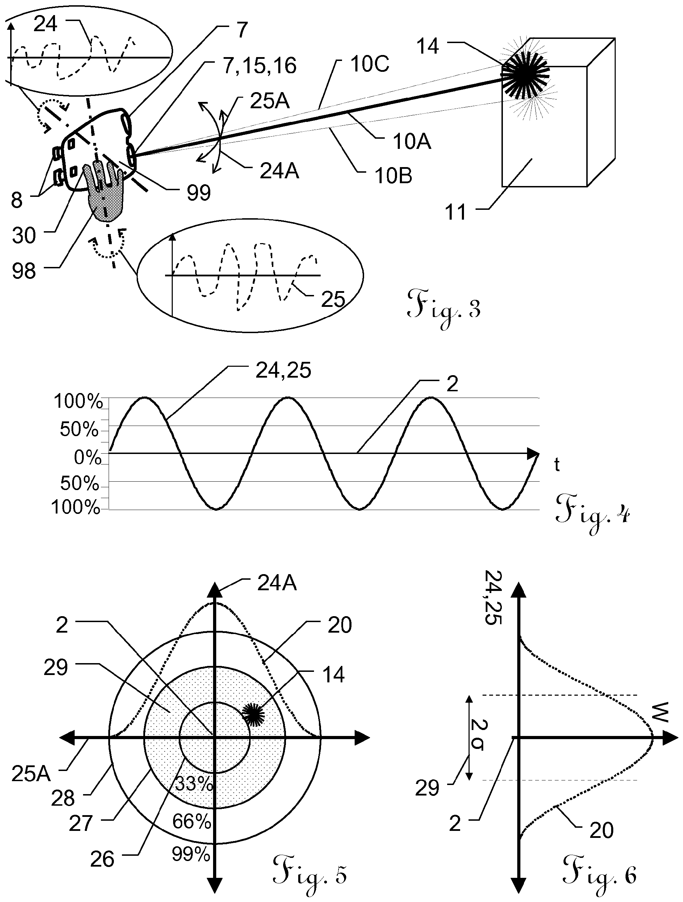

**Fig. 3** zeigt eine weitere, beispielhafte Illustration einer Vermessung eines Zielobjekts 11 mit Beobachtungsgerät 99 in Form eines Binokulars, welches der Benutzer in der Hand 98 hält um mit einem Blick in die Okulare 8 das Zielobjekt 11 zur Entfernungsbestimmung anzuzielen. In der Darstellung wird die optische Strahlung durch eines der Objektive 7 ausgesendet und empfangen, es handelt sich also um eine Koaxiale Messung, bei welcher die optische Sende- und oder Empfangsstrahlung im Gerät aus dem Durchlichtkanal ein bzw. ausgekoppelt wird. Das Objektiv 7 des Beobachtungskanals stellt also einen Teil der Sendeoptik 16 und/oder Empfangsoptik 15 des Entfernungsmessers dar.

Der unweigerlich vorhandene Tremor der Hand 98 bedingt dabei Winkelbewegungen 24A,25A, welche die Richtung 10A der gewünschten Anzielung beispielsweise in Richtungen 10B, Richtung 10C oder einer anderen Richtung schwanken lässt. Damit würden im Stand der Technik unterschiedliche Punkte 14 am Zielobjekt vermessen werden, bzw. der bestimmte Entfernungswert würde als eine art Mittelung der Laufzeitinformationen auf die unterschiedlichen Zielpunkte 14 bestimmt werden. Die unterschiedlichen Zielungen können bei der Kumulation ihrer Signalinformationen z.B. eine Verbreiterung der Reflektionspulsform im zur Entfernungsbestimmung herangezogenen Signal bewirken, was statt dem geringeren SNR des angestrebten Idealfalls der Mehrpulsmessung - eine grössere Breite des Messunsicherheitsbereichs und gegebenenfalls auch Mehrdeutigkeiten der ermittelten Entfernung hervorrufen kann. Dies obwohl der Benutzer den Auslöser 30 bei einer aus seiner Sicht exakten Anzielung des gewünschten Zielpunkts 14 betätigte.

**Fig. 4** zeigt eine beispielhafte Bewegung der Unsicherheit der Anzielung, wie diese von einem Bewegungssensor im Beobachtungsgerät bei Handhaltung erfasst wird.

Die Bewegung äussert sich im allgemeinen als eine Oszillation um die gewünschte Anzielung, welche sich in einem Zentralbereich der Oszillation befindet. Diese Oszillation ist dabei im allgemeinen unregelmässig, lässt sich aber in ihrer Grundschwingung zu einem hohen Anteil auf eine oder einige wenige annähernd Sinusartige Kurven zurückführen, bzw. in solche zerlegen. Es gibt dabei jedoch durchaus auch Ausreisser der Bewegungskurven von dieser Annäherung. Vorzugsweise werden vom Bewegungssensor die Oszillationen in zumindest zwei Achsen erfasst, wobei diese in einem Abweichungsvektor bzw. dem Betragswert dieses Vektors zusammenfassbar sind.

Der Anschaulichkeit halber ist der Amplitudenverlauf der Oszillation hier stark vereinfacht als reine Sinusschwingung dargestellt, was einer ersten Nährung entspricht, jedoch nicht als einschränkend zu betrachten ist. Die Oszillation der Instabilität ist vereinfacht als ein Wechselanteil des Bewegungssensors anzusehen, welcher meist innerhalb eines gewissen Frequenzbands auftritt, jedoch kann auch ein sehr niederfrequenter Anteil oder ein Gleichanteil der Bewegungssensordaten berücksichtigt werden, z.B. um ein komplettes Abdriften vom Zielobjekt während des Zeitfensters zu detektieren und in diesem Falle die Messung abzubrechen, da ohnehin kein gültiges Messergebnis zu erwarten ist.

**Fig. 5** zeigt in einem Achskreuz 24A,25A die Position 14 den Messpunkts der Entfernungsmessung am Zielobjekt 11 bzw. die Winkelabweichung durch die Instabilität. In vereinfachter Weise werden die Bewegungen in beiden Achse 24A,25A als etwa gleich dargestellt, wodurch sich die Auftreffwahrscheinlichkeitsgrenzen der Wahrscheinlichkeitskurve 20 vereinfacht als Kreise 26,27,28 darstellen lassen. Hier sind Kreise für je 99% (28), 66% (27) und 33% (26) der Richtungen dargestellt. Das Zentrum stellt die eigentlich beabsichtigte Anzielrichtung 2 dar, in welche die Anzielung im stabilen Idealfall erfolgen würde. Die dargestellte Wahrscheinlichkeitsverteilung entspricht der Verteilung der Pulsauftreffpunkte 14, wenn diese kontinuierlich bzw. periodisch über das Zeitfenster ausgesendet würden.

Zur Erläuterung des Erfindungsgemässen Prinzips wonach die zur Mindestanzahl zählenden Pulse vorgegebene Kriterien hinsichtlich diesen zeitlich zugeordneten Raumlagedaten (24,25 bzw. 24A,25A) erfüllen, ist hier Beispielhaft der gefüllte Bereich 29 innerhalb des Kreises 27 als ein solches Kriterium im Achsenkreuz dargestellt. Das Kriterium ist in diesem Beispiel also erfüllt, wenn der Betrag eines Vektors der Raumlagedaten unterhalb eines Grenzwertes liegt. Signalinformationen mit Raumlagedaten ausserhalb dieses Kriteriums zählen nicht zur Mindestanzahl und es folgt keine Bestimmung der Entfernung mit Informationen von allenfalls zeitlich zugehörigen Pulsen.

**Fig. 6** zeigt ein anderes Kriterium in einer zweidimensionalen Darstellung über den Abweichungen 24 oder 25 für sich bzw. von einem Vektor aus beiden. Statistisch gesehen kann die Instabilität zumindest näherungsweise als in etwa Normalverteilt um die Anzielung beschrieben werden. Dabei kann z.B. die Standardabweichung (bzw. die Varianz) der Bewegung als Korridor für den Einbezug von Einzelmessungen in die Ermittlung der Entfernung genutzt werden. In der Darstellung wird das Kriterium 29 anhand eines statistischen Kennwertes der Instabilitätsverteilung 20 um die gewünschte Anzielung 2 gebildet, z.B. dass als Kriterium zum Einbezug die Instabilität in einem Bereich der Standardabweichung von 2 Sigma zu liegen hat, wobei dieser Wert rein beispielhaft anzusehen ist. Auch kann ein anderer statistischer Parameter als die Standardabweichung herangezogen werden.

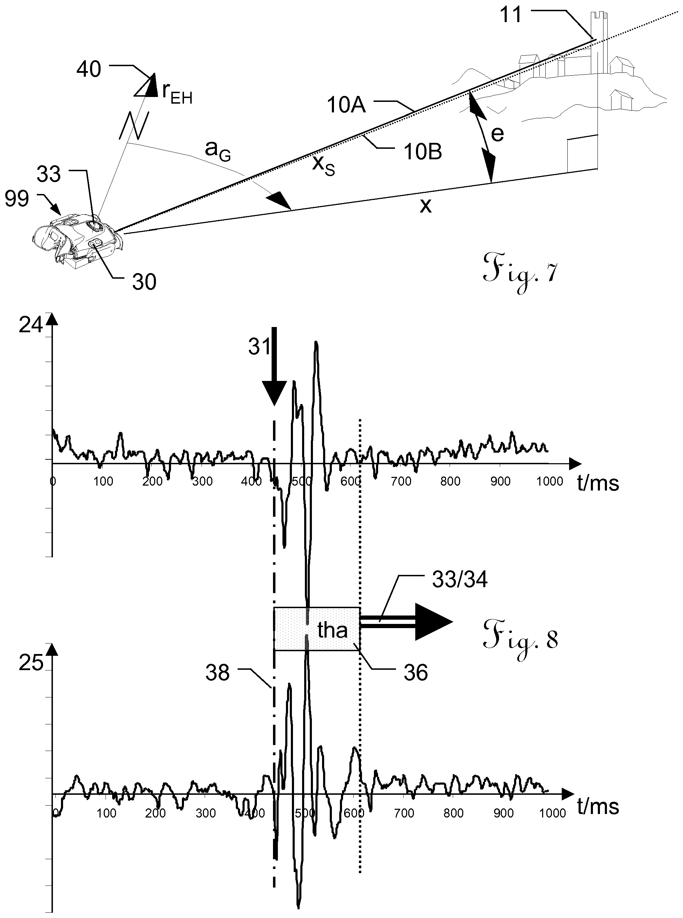

**Fig. 7** zeigt eine Ausführungsform eines erfindungsgemässen Beobachtungsgeräts welches zur Landmarkennavigation eingesetzt wird. Beispielsweise kann hierzu mittels Neigungssensoren im Beobachtungsgerät eine Neigung e der Messrichtung gegenüber der Horizontalen ermittelt werden, wodurch beispielsweise eine Horizontalprojektion x der vom EDM bestimmten Distanz Xs ermittelbar ist. Auch kann, z.B. mit einem Kompass im Beobachtungsgerät eine vertikale Winkelmessung, uns somit eine azimutale Messrichtung Ag bestimmt werden. Das Gerät kann somit beispielsweise zur einfachen Navigation anhand kartographisierter Landmarken eingesetzt werden.

Wenn Koordinaten des Beobachtungsstandorts bekannt sind, z.B. wenn das Gerät oder der Standort des Geräts mittels GPS 33 mit einer mittleren Genauigkeit global referenziert ist, kann auch eine Bestimmung von geographischen Koordinaten des Zielobjekts 11 anhand der Entfernungs- und Ausrichtungsdaten erfolgen.

Dabei ist die erzielbare Genauigkeit mit einem handgehaltenen Gerät, dessen Winkelausrichtung beispielsweise über einen Neigungssensor und/oder einen Kompass ermittelt wird, in oben genannten Fällen ohnehin beschränkt, sodass eine Stabilisierung des gesamten Beobachtungsgeräts nur geringe Verbesserungen bringen würde. Jedoch ist eine erfindungsgemäss mögliche, sichere Anzielung im Hinblick auf eine Korrekte Erfassung der Entfernung zu Zielobjekt 11 bei derartigen Messaufgaben von Bedeutung. In der gezeigten Figur würde eine geringe Abweichung von der Anzielung 10A ein mit der gepunkteten Linie 10B dargestelltes Vorbeizielen am Zielobjekt 11 bedeuten, was ein Messung verunmöglichen würde bzw. durch die Instabilität das SNR der Messung verschlechtern und das Ergebnis ungenauer und/oder unsicherer machen würde.

**Fig. 8** zeigt ein Beispiel einer Tremorkurve einer Handhaltung eines Geräts, aufgenommen mit einem zweiachsigen Beschleunigungssensor. Das mit einem Pfeil 31 symbolisierte Drücken eines Auslösetasters 30 zum Zeitpunkt 38 ist im Verlauf der Oszillationskurven 24,25 deutlich als dadurch bedingte Spitzenwerte ersichtlich. In einer speziellen Ausführungsform können derartige auslösebedingte Verwackelungen beispielsweise durch die gezeigte Totzeit 36 (tha) nach dem Auslösen, während welcher keine Messung erfolgt ausgeblendet werden. Die Dauer der Totzeit kann dabei beispielsweise abhängig von einem Bewegungsamplitudenwert oder als definierte Zeit bestimmt werden.

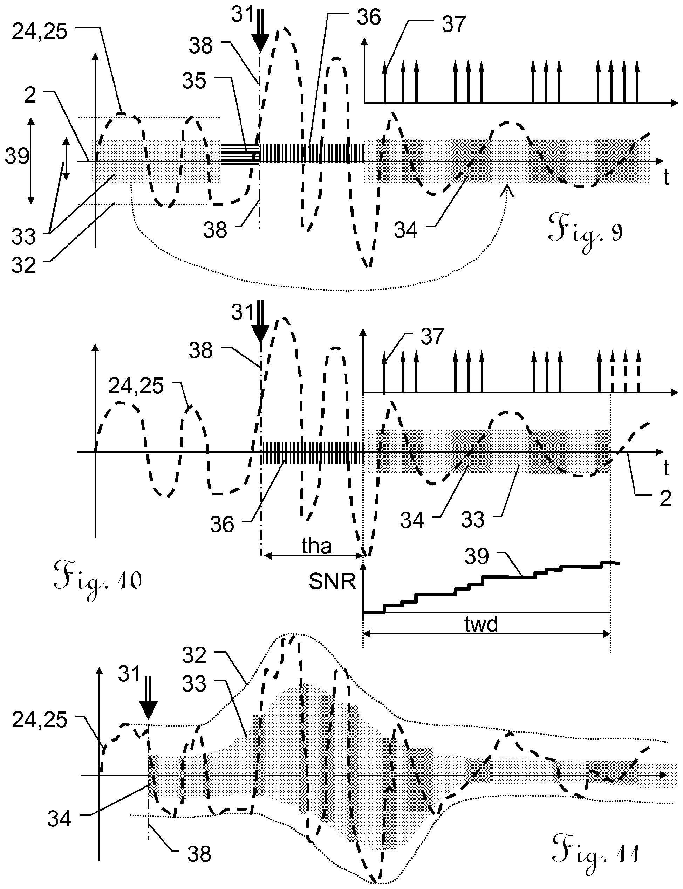

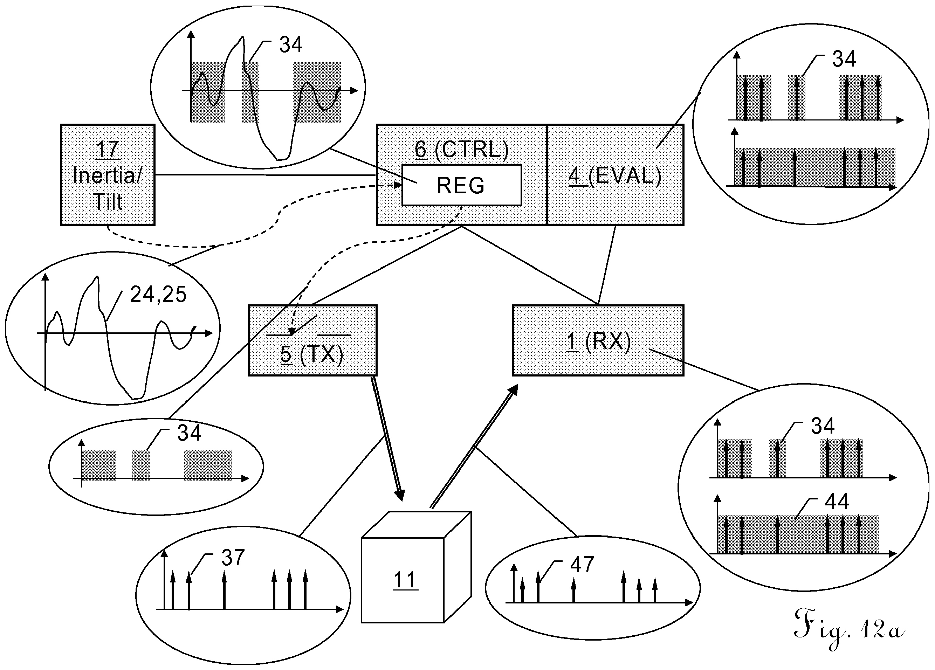

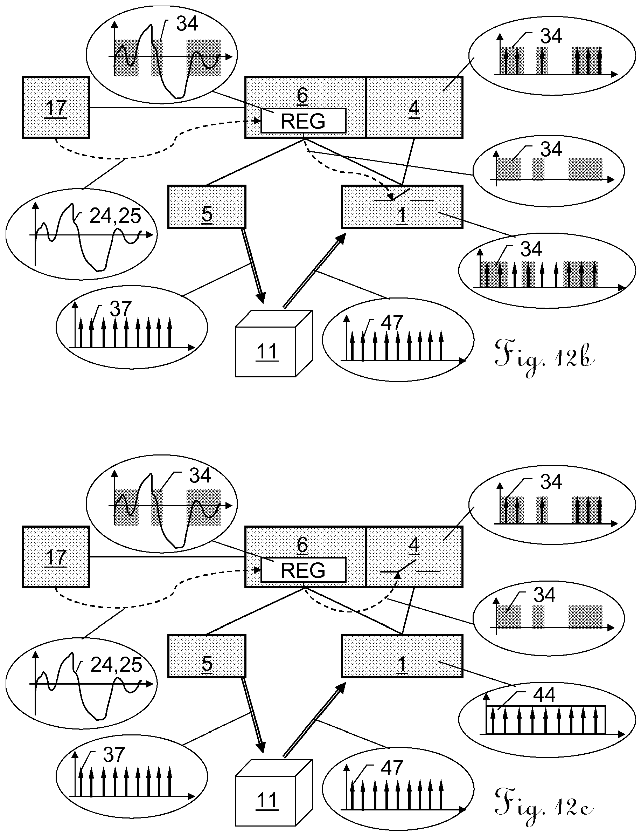

**Fig. 9** zeigt eine Ausführungsform der Erfindung, bei welcher mit einer gestrichelte Linie beispielhafte Raumlagedaten des Bewegungssensors 17 als Graph 24,25 über der Zeit dargestellt sind. Die Linie kann dabei einachsige oder entsprechend kombinierte mehrachsige Raumlagedaten darstellen, was durch die beiden mit Beistrich getrennten Bezugszeichen 24,25 symbolisiert ist. Zum mit einem Pfeil 31 markierten Zeitpunkt 38 wird der Auslöser 30 betätigt. Im diesem Beispiel werden die Instabilitäten bereits vor diesem Zeitpunkt 38 erfasst und anhand eines Bereichs 39 zwischen den punktiert gezeigten, geglätteten Spitzenwerten 32 der Raumlagedaten 24,25 wird die (hier als relative Referenz in Form der Zeitachse dargestellte) Anzielrichtung 2 bestimmt. Weiters wird auch ein Bereich 33 definiert, in welchem das Kriterium als erfüllt gilt, z.B. als prozentualer Wert des Bereichs 39. Alternativ kann die Bereichsgrösse 33 auch als Fixer Wert in der Einheit der Raumlagedaten 24,25 vorgegeben werden, z.B. indem eine Einstellung beim Beobachtungsgerät in Form einer Auswahl zwischen "Grosses Zielobjekt" und "Kleines Zielobjekt" bereitgestellt wird. Da das manuelle Betätigen des Auslösers 30 - wie anhand des Graphen 24,25 ersichtlich - eine besonders hohe Instabilität bewirkt, wird in weiterbildender Weise in dieser Ausführungsform ein Pre-Zeitbereich 35 direkt vor und ein Post-Zeitbereich 36 direkt nach der Betätigung 31 nicht berücksichtigt. Dies ist erfindungsgemäss jedoch nicht zwingend erforderlich. Ist die starke Auslösungs-Oszillation nach der Zeit 36 abgeklungen, so wird im Anschluss das Entfernungsmesszeitfenster geöffnet und wenn die Raumlagedaten 24,25 das Kriterium im Bereich 33 (dessen Breite hier - wie durch den Pfeil angedeutet - von der Anzielung vor der Auslösung übernommen wird) erfüllen, so werden zeitlich zugehörige Pulsinformationen zur Entfernungsmessung herangezogen indem dann auch tatsächlich Messpulse 37 von der Sendeeinheit des Entfernungsmessers emittiert werden, was im obern Teilgraphen dargestellt ist. Die dieses Kriterium erfüllenden Teilbereiche 34 des Bereichs 33 sind entsprechend dunkler gekennzeichnet. Somit zählen nur Signalinformationen von Pulsen, deren zugehörige Raumlagedaten 24,25 das Kriterium erfüllen zu der Mindestanzahl der Pulse anhand welcher die Entfernung bestimmt wird. Die zu erreichende Mindestanzahl kann dabei z.B. als Zahlenwert vorgegeben sein oder sich wie im Rahmen der folgenden Ausführungsform erläutert bestimmen. Statt anhand des Kriteriums das Aussenden zu steuern kann auch eine Prinzip wie im Folgenden bei Fig. 12a, Fig. 12b und Fig. 12c erläutert angewandt werden.

**Fig. 10** zeigt ein anderes Ausführungsbeispiel mit einem ähnlichen Aufbau wie Fig. 9. Im Unterschied zu vorher wird dabei die Zielrichtung 2 und das Kriterium erst nach dem Auslösen 31 und dem optionalen warten um eine Totzeit 36 (tha) bestimmt. Die Zielrichtung 2 kann als aktueller Raumlagedatenwert 24,25 zum Zeitpunkt 38 der Auslösung bestimmt werden, jedoch ist es im Hinblick auf die Instabilitäten praktikabel einen zeitlichen Mittelwert, Median, RMS, statistischer Kennwert, etc. der Raumlagedaten zur Bestimmung dieser Zielrichtung 2 angewendet werden.

Mit jedem ausgesendeten Puls 37 erhöht sich dabei - wie im unteren Sub-Graphen gezeigt - das SNR 39 der kumulierten Signalinformation der Pulse. Hat das SNR 39 eine zur Entfernungsbestimmung hinreichende Schwelle erreicht, so ist die geforderte Mindestanzahl von Pulsen erreicht und das Zeitfenster twd kann geschlossen werden, da die Entfernung nun zuverlässig ermittelbar ist. Dies ist durch die mit unterbrochenen Linien dargestellten Pulse 37 dargestellt, welche erst gar nicht mehr ausgesendet, empfangen und/oder ausgewertet werden. Statt anhand des Kriteriums das Aussenden zu steuern kann also auch ein Prinzip angewandt werden, wie im Folgenden bei Fig. 12a, Fig. 12b und Fig. 12c erläutert wird bzw. eine Kombination dieser. Alternativ kann - wie bereits erläutert - die Mindestanzahl als Zahlenwert vorgeben werden oder eine Kombination dieser beiden Mindestanzahlbedingungen angewandt werden, bei welcher z.B. jene Bedingung schlagend wird, welche zuerst erfüllt ist.

**Fig. 11** zeigt eine weiter Ausführungsform mit einem ähnlichen Graphen wie zuvor in Fig. 9 oder Fig. 10, jedoch bestimmt sich hier das Kriterium dynamisch. Wie hier beispielhaft gezeigt, kann dabei zumindest annähernd eine Hüllkurve 32 der Raumlagedaten bestimmt werden, abhängig von welcher sich ein Bereich 33 des Kriteriums bestimmt. Pulsinformationen aus den dunkel markierten Bereichen 34 zählen infolge zu der Mindestanzahl, auf Basis welcher die Entfernung ermittelt wird. Es wir damit das Zeitfenster der Entfernungsmessung definiert, welches insbesondere nach erreichen der Mindestanzahl geschlossen wird. In dieser Ausführungsform wird dabei das Zeitfenster direkt mit der Auslösung 31 gestartet.

Die erläuterten Ausführungsformen können z.B. als automatisch- oder benutzerwählbare Optionen bereitgestellt werden, wobei z.B. direkt ein Prozentsatz oder effektiver Wert der Bereichsgrösse 33 des Kriteriums vorgebbar sein kann oder eine mehr Benutzerintuitive Auswahl wie grosses/kleines Zielobjekt oder enge/weite Zielrichtungstoleranz.

Neben der primären, erfindungsgemässen raumlagedatenbasierten Steuerung der Entfernungsmessung kann auch eine Richtungs- und/oder Neigungsmessung oder eine andere Messwerterfassung des Beobachtungsgeräts auf dieselbe Weise abhängig von der mit dem Bewegungssensor bestimmten Raumlagedaten gesteuert werden. Die zeitliche Erfassung bzw. eine zeitliche Mittelung dieser Messwerte kann also ebenfalls während des Zeitfensters und gegebenenfalls auch nur bei Erfüllung des Kriteriums erfolgen.

**Fig. 12a** zeigt ein Blockschema einer Ausführungsform der Erfindung. Die Komponenten sind als Blöcke und die Signalpfade zwischen diesen als Verbindungen dargestellt. In Ovalen sind jeweils Beispiele für zugehörige Signalformen dargestellt.

In dieser Ausführungsform werden Pulse, welche aufgrund des Nichterfüllens des Kriteriums nicht zur Mindestanzahl zählen würden, erst gar nicht ausgesandt - indem die Sendeinheit 5 Raumlagedatenabhängig gesteuert wird. Der Bewegungssensor 17 stellt dabei die Raumlagedaten 24,25 bereit. Die Steuereinheit 6 bestimmt anhand der Raumlagedaten, die Zeitbereiche 34 in welchen das Kriterium erfüllt ist, speziell anhand eines Amplitudenwerts der Raumlagedaten. Dabei können auch allfällige Totzeiten der Komponenten und Einheiten des Entfernungsmessers berücksichtigt werden. In dieser Ausführungsform wird in Folge die Sendeeinheit nur dann zum Aussenden eines Pulses veranlasst, wenn das Kriterium erfüllt ist, also in den Zeitbereichen 34. Die von der Sendeeinheit 5 emittierten Pulse 37 werden zumindest teilweise von Zielobjekt 11 zurückgeworfen und werden von der Empfangseinheit 1 als Empfangspulse 47 erfasst. Das Erfassen kann dabei kontinuierlich (wie mit dem Bereich 44 gezeigt) oder nur bei Erfüllung des Kriteriums (also während der Bereiche 34) erfolgen. Dabei kann letzteres den Rauschanteil der zur Entfernungsbestimmung ausgewerteten kumulierten Information und den Energieverbrauch weiter verringern kann.

Die Auswerteeinheit 4 bestimmt dann anhand der Mindestanzahl der Pulse eine Entfernung. Da die Pulse nur bei Erfüllung des Kriteriums emittiert wurden, können dabei die Signalinformationen von allen empfangenen Pulsen bei der Entfernungsmessung herangezogen werden. Es kann aber beispielsweise auch zusätzlich eine weitere Selektion der herangezogenen Informationen anhand der diesen zugehörenden Raumlagedaten erfolgen, indem die besten Pulse - also jene mit den Raumlagedaten am nächsten der idealen Anzielrichtung - bevorzugt einbezogen werden, also z.B. mit einer entsprechen höheren Bewertung. Es kann auch Reihung der Signalinformationen entsprechend der zugehörigen Raumlagedaten erfolgen und die Entfernungsermittlung bei hinreichendem SNR abgebrochen werden.

Der oben beschriebene Ablauf wird abhängig von der Betätigung 31 des Auslösers 30 gestartet, wobei das Zeitfenster der Messung direkt oder nach einer definierten Wartezeit geöffnet wird. Nach erreichen der Mindestanzahl kann dieses Zeitfenster wieder geschlossen werden.

**Fig. 12b** zeigt ein Blockschema einer anderen beispielhaften Entfernungsmessung, mit demselben Aufbau wie Fig. 12a. In diesem Beispiel werden Pulse, welche aufgrund des Nichterfüllens des Kriteriums nicht zur Mindestanzahl zählen nicht Empfangen, indem die Empfangseinheit 1 Raumlagedatenabhängig gesteuert wird.

Die Pulse werden hier unabhängig von der Raumlage des Beobachtungsgeräts während des Zeitfensters ausgesandt und folglich auch zurückgeworfen, aber nur während raumlagedatenabhängigen Zeitbereichen innerhalb des Zeitfensters, werden deren Pulsinformationen tatsächlich empfangen und der Auswertung bereitgestellt. Somit zählen nur jene Pulse zur Mindestanzahl der bei der Entfernungsbestimmung herangezogenen Pulssignalinformationen, welche ein entsprechendes Kriterium der zugehörigen Raumlage erfüllen.

**Fig. 12c** zeigt ein Blockschema einer anderen beispielhaften Entfernungsmessung mit demselben Aufbau wie Fig. 12a oder Fig. 12b. In diesem Beispiel werden Pulse, welche aufgrund des Nichterfüllens des Kriteriums nicht zur Mindestanzahl zählen, nicht Ausgewertet, indem die Auswerteeinheit 1 Raumlagedatenabhängig gesteuert wird.

Die Pulse werden hier unabhängig von der Raumlage des Beobachtungsgeräts während des Zeitfensters ausgesandt und empfangen. Die Auswertung der Signalinformationen erfolgt aber nur für jene Pulse deren zugehörige Raumlagedaten ein vorgegebenes Kriterium erfüllen. Diese Bewertung kann online geschehen oder die Signalinformationen und zugehörigen Raumlagedaten können während des Zeitfensters zwischengespeichert werden und erst nach schliessen des Zeitfensters ausgewertet werden, um festzustellen welche Pulse zur Mindestanzahl der bei der Entfernungsbestimmung herangezogenen Pulssignalinformationen zählen.

Die mit Fig. 12a, Fig. 12b, Fig. 12c erläuterten Prinzipien können auch miteinander kombiniert werden, wie dies z.B. weiter oben schon beschrieben wurde.

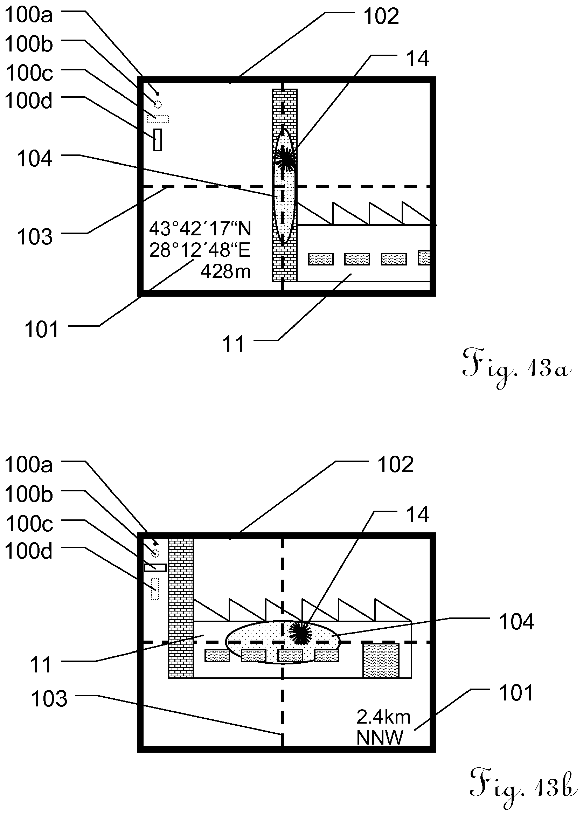

**Fig. 13a** zeigt ein Beispiel eines ersten Beobachtungsbildes 102 einer beispielhaften Ausführungsform einer Implementierung der Erfindung. Das dem Benutzer präsentierte Beobachtungsbild 102 zeigt ein Gebäude 11 als beobachtetes Zielobjekt, welches mit dem Fadenkreuz 103 angezielt wird um mit dem Entfernungsmesser vermessen zu werden. Die Messwerte werden in diesem Beispiel in Form von geographischen Zielkoordinaten im Anzeigefeld 101 eingeblendet, welche z.B. aus der ermittelten Entfernung unter Berücksichtigung von GNNS-Receiver-Daten und der horizontalen und vertikalen Ausrichtung der Zielachse ermittelt wurden. Dabei kann zwischen unterschiedlichen Gültigkeitsbereichen gewählt werden, in diesem Beispiel etwa "kleiner Gültigkeitsbereich" 100a, "grosser Gültigkeitsbereich" 100b, "horizontaler Gültigkeitsbereich" 100c oder "vertikaler Gültigkeitsbereich" 100d. Entsprechend der vertikalen Zielform des angezielten Turmes des Gebäudes 11, ist hier der vertikale Gültigkeitsbereich 100d gewählt, was z.B. mit einem durch eine Ellipse dargestellten Bereich 104 korrespondieren kann, welcher Bereich 104 optional auch im Beobachtungsbild angezeigt werden kann. Neben einer Ellipse 104 kann der Bereich 104 aber auch andere Formen haben, etwa Rechteckig, Rund, etc. Erfindungsgemäss werden dabei Pulse nicht zur Mindestanzahl gezählt, wenn diese das anhand des Bewegungssensors bestimmte Kriteriums - innerhalb des ausgewählten Bereiches 104 (bzw. 100d) zu liegen - nicht erfüllen. Der beispielsweise gezeigte, von der Fadenkreuz-Zielachse aufgrund von Haltungs-Instabilitäten abweichende Entfernungsmesspunkt 14 würde also etwa Berücksichtigung finden, auch wenn er vertikal deutlich von der Zielachse abweicht.

**Fig. 13b** zeigt ein Beispiel eines zweiten Beobachtungsbildes 102 einer beispielhaften Ausführungsform der Erfindung, mit einem ähnlichen Aufbau wie Fig. 13a. In diesem Beispiel wird ein sich vertikal erstreckender Gebäudekomplex des Zielobjekts 11 mit dem Fadenkreuz 103 angezielt und entsprechend der Bereich 100c gewählt. Die ermittelte Entfernung wird in diesem Beispiel gemeinsam mit einer Kompass-Ausrichtung im Feld 101 angezeigt. Neben fix vorgegebenen Bereichen 100a,100b,100c,100d können die Bereiche oder Kriteriengrenzen auch vom Benutzer in ihrer Grösse und/oder Form anpassbar gestaltet werden, etwa indem die horizontalen und/oder vertikalen Bereichsgrenzen oder eine Durchmessergrenze des Bereichs über ein Bedieninterface kontinuierlich oder stufenweise verschiebbar sind, beispielsweise indem die beiden Brennweiten der gezeigten Ellipse jeweils variierbar sind. Es kann aber in anderen Ausführungsformen auch gänzlich auf eine Wählbarkeit und/oder Anzeige des Kriteriums verzichtet werden.

## Patentansprüche

1. Handhaltbares Beobachtungsgerät (99) mit einem, insbesondere unstabilisierten, Beobachtungspfad zur optischen Anzielung eines Zielobjekts (11),
und mit einem optoelektronischen Entfernungsmesser zur Entfernungsmessung in Richtung der Anzielung, insbesondere ein Laser-Distanzmesser mit einem kollimierten Laserstrahl als Zielachse, mit:
▪ einer Sendeeinheit (5) zur Aussendung einer zeitlichen Folge von Pulsen optischer Strahlung (10),
▪ einer Empfangseinheit (1) zum Empfang eines vom Zielobjekt (11) zurückgeworfenen Anteils (12) der optischen Strahlung (10) und zur Ermittlung einer Signalinformation des zurückgeworfenen Anteils eines ausgesendeten Pulses, und
▪ einer elektronischen Auswerteeinheit (4), welche derart ausgebildet ist, dass auf Basis einer Signallaufzeit zwischen Aussendung und Empfang der optischen Strahlung (10,12) eine Entfernung (13) zum Zielobjekt (11) ermittelbar ist,
wobei die Ermittlung der Entfernung (13) unter Einbezug der Signalinformation von einer bestimmten Mindestanzahl von Pulsen erfolgt,
welche Mindestanzahl eine Mindestlänge eines Zeitfensters (twd) der Entfernungsmessung definiert, und mit
einem manuell betätigbaren Auslöser (30), dessen Betätigung einen Beginn des Zeitfensters (twd) der Entfernungsmessung bedingt,
wobei das Beobachtungsgerät (99)
einen Bewegungssensor (17) zur Erfassung einer Instabilität einer Raumlage des Beobachtungsgeräts (99) und eine Ansteuerungseinheit (6) des Entfernungsmessers aufweist,
**dadurch gekennzeichnet, dass**
die Ansteuerungseinheit (6) derart ausgebildet ist,
dass
eine Steuerung des Entfernungsmessers anhand von Raumlagedaten (24,25) des Bewegungssensors (17) derart erfolgt, dass die zur Mindestanzahl zählenden Pulse vorgegebene Kriterien hinsichtlich diesen zeitlich zugeordneten Raumlagedaten (24,25) erfüllen, wobei die Steuerung abhängig von den Raumlagedaten (24,25) des Bewegungssensors (17) die Sendeeinheit (5) derart ansteuert, dass die Aussendung der Pulse der optischen Strahlung (10) nur in einem definierten Richtungsbereich um das angezielte Zielobjekt (11) erfolgt.

2. Beobachtungsgerät (99) nach Anspruch 1, **dadurch gekennzeichnet, dass**
die Mindestanzahl
als eine festgelegten Anzahl vorgegeben ist, oder sich dynamisch in Abhängigkeit einer Signalqualität des Empfangs bestimmt,
insbesondere wobei die Mindestanzahl als jene Anzahl von Pulsen definiert ist, bei welcher ein mindest-SNR-Grenzwert bei der Ermittlung der Entfernung (13) erreicht ist.

3. Beobachtungsgerät (99) nach einem der Ansprüche 1 bis 2, **dadurch gekennzeichnet, dass** die Instabilität in Form einer Oszillation (24a,25a) einer Raumrichtung der Anzielung erfasst wird, insbesondere einer Oszillation (24a,25a) durch Zitterbewegungen einer Handhaltung (98) des Beobachtungsgeräts (99), und
die Steuerung anhand eines Kriteriums erfolgt, nach welchem zum Einbezug der Signalinformation ein zu dieser zeitlich zugehöriger, momentaner Oszillationswert in einem vorgegebenen Bereich um einen Zentralbereich der Oszillation (24a,25a) liegt.

4. Beobachtungsgerät (99) nach Anspruch 3, **dadurch gekennzeichnet, dass**
der Zentralbereich der Oszillation (24a,25a) ein Mittelwert der Bewegung über einen definierten Zeitraum vor oder nach einem Zeitpunkt (38) der Betätigung des Auslösers (30) ist.

5. Beobachtungsgerät (99) nach Anspruch 3 oder 4, **dadurch gekennzeichnet, dass**
der vorgegebene Bereich um den Zentralbereich der Oszillation (24a,25a) in dynamischer oder statistischer Abhängigkeit von einer Amplitude der
Oszillation (24a,25a) festgelegt wird,
insbesondere als ein vom Benutzer festlegbarer Prozentsatz eines Maximalwerts der Amplitude oder als Prozentsatz einer Standardabweichung der Amplitude der Oszillation (24a,25a).

6. Beobachtungsgerät (99) nach einem der Ansprüche 1 bis 5, **dadurch gekennzeichnet, dass**
die Steuerung abhängig von den Raumlagedaten (24,25) des Bewegungssensors (17) die Empfangseinheit (1) derart ansteuert,
dass der Empfang nur für aus einem definierten Richtungsbereich um das angezielte Zielobjekt (11) zurückgeworfenen Anteilen (12) der optischen Strahlung erfolgt.

7. Beobachtungsgerät (99) nach einem der Ansprüche 1 bis 6, **dadurch gekennzeichnet, dass**
die Steuerung abhängig von den Raumlagedaten (24,25) des Bewegungssensors (17) die Auswerteeinheit (4) derart ansteuert, dass die Ermittlung der Entfernung (13) nur unter Einbezug von aus einem definierten Richtungsbereich um das angezielte Zielobjekt (11) zurückgeworfenen Anteilen (12) der optischen Strahlung erfolgt,
insbesondere wobei während des Zeitfensters ein Speicher der Auswerteeinheit (4) die Signalinformationen und die zeitlich zum Aussenden und/oder Empfangen zugehörenden Raumlagedaten (24,25) aufzeichnet und die Ermittlung mit einer raumlagedatenabhängigen Richtungsbewertung der Signalinformationen erfolgt.

8. Beobachtungsgerät (99) nach einem der Ansprüche 1 bis 7, **dadurch gekennzeichnet, dass**
der Beobachtungspfad als optischer Durchlichtpfad von einem Objektiv (7) zu einem Okular (8) ausgeführt ist.

9. Beobachtungsgerät (99) nach Anspruch 8, **dadurch gekennzeichnet, dass**
der Durchlichtpfad unstabilisiert ist und das Beobachtungsgerät (99) ein unstabilisiertes Beobachtungsbild im Okular (8) bereitstellt.

10. Beobachtungsgerät (99) nach einem der Ansprüche 1 bis 9, **dadurch gekennzeichnet, dass**
das Beobachtungsgerät (99) mit
▪ einer Visiereinrichtung im Beobachtungspfad des Beobachtungsgeräts (99), durch welche eine Richtung der Anzielung definiert ist,
▪ einem Restlichtverstärker,
▪ einer Einblendung von Displaybildern in den Beobachtungspfad,
▪ einer Ableitung von Kamerabildern aus dem Beobachtungspfad,
▪ einer Winkelmesseinheit,
▪ einer Nordrichtungsbestimmungseinheit,
▪ einer Neigungsbestimmungseinheit und/oder
▪ einer geographischen Koordinatenbestimmungseinheit (GPS),
ausgebildet ist,
insbesondere wobei eine Steuerung einer Erfassung von Daten von zumindest einer der oben genannten Einheiten anhand der vorgegebenen Kriterien erfolgt.

11. Entfernungsmessverfahren mit einem handhaltbaren entfernungsmessenden Beobachtungsgerät (99) mit:
▪ einem Anzielen eines Zielobjekts (11) mit einem Beobachtungspfad, insbesondere einem optischen Durchlichtpfad von einem Objektiv (7) zu einem Okular (8) des Beobachtungsgeräts (99),
▪ einem Auslösen einer Entfernungsmessung in Richtung der Anzielung durch manuelles Betätigen eines Auslösers (30), welche ein Beginnen des Zeitfensters der Entfernungsmessung bedingt
▪ einem Aussenden einer zeitlichen Folge von Pulsen von amplitudenmodulierter optischer Strahlung (10), insbesondere von Laserlicht, in Richtung der Anzielung, mit einer Sendeeinheit,
▪ einem Empfangen eines Anteils (12) der optischen Strahlung, welcher von Zielobjekt (11) zurückgeworfen wird, mit einem photosensitiven elektrischen Bauelement (1), und einem Ermitteln einer Signalinformation der empfangenen optischen Strahlung (12), mit einer Empfangseinheit (1),
▪ einem Ermitteln einer Entfernung (13) zum Zielobjekt (11) auf Basis einer Signallaufzeit zwischen Aussenden und Empfangen der optischen Strahlung, mit einer elektronischen
Auswerteeinheit (4), wobei
das Ermitteln der Entfernung (13) mit einem Einbeziehen der Signalinformation von einer bestimmten Mindestanzahl von Pulsen erfolgt,
welche Mindestanzahl eine Mindestlänge eines Zeitfensters der Entfernungsmessung definiert,
**gekennzeichnet durch,**
ein Erfassen einer Instabilität einer Raumlage (24,25) des Beobachtungsgeräts (99) mit einem
Bewegungssensor (17) und,
mit einer Ansteuerungseinheit, ein Steuern der Entfernungsmessung anhand von Raumlagedaten (24,25) des Bewegungssensors (17), welches derart erfolgt, dass die zur Mindestanzahl zählenden Pulse vorgegebene Kriterien hinsichtlich diesen zeitlich zugeordneten Raumlagedaten (24,25) erfüllen,
wobei das Aussenden der Pulse nur in einem definierten Richtungsbereich um das angezielte Zielobjekt (11) erfolgt.

12. Entfernungsmessverfahren nach Anspruch 11,
**gekennzeichnet durch**
ein Vorgeben einer festgelegten Anzahl für die Mindestanzahl, oder
ein dynamisches Bestimmen der Mindestanzahl in Abhängigkeit einer Signalqualität des Empfangens, insbesondere wobei ein Erreichen eines mindest-SNR-Grenzwerts bei der Ermittlung der Entfernung (13) die Mindestanzahl definiert.

13. Entfernungsmessverfahren nach Anspruch 11 oder 12,
**dadurch gekennzeichnet, dass**
das Erfassen der Instabilität als eine Oszillation (24a,25a) einer Raumrichtung der Anzielung erfolgt , insbesondere einer Oszillation (24a,25a) durch Zitterbewegungen einer Handhaltung (98) des Beobachtungsgeräts (99),
und das Steuern anhand eines Kriteriums erfolgt, nach welchem zum Einbeziehen der Signalinformation ein zu dieser zeitlich zugehöriger, momentaner Oszillationswert in einem vorgegebenen Bereich um einen Zentralbereich der Oszillation (24a,25a) liegt, insbesondere wobei ein Bestimmen des Zentralbereichs als Mittelwert der Oszillation (24a,25a) über einen definierten Zeitraum vor oder nach einem Zeitpunkt (38) der Betätigung des Auslösers (30) erfolgt.

14. Entfernungsmessverfahren nach einem der Ansprüche 11 bis 13 , **dadurch gekennzeichnet, dass** das Steuern derart erfolgt, dass zusätzlich zum Aussenden,
▪ das Empfangen nur für aus einem definierten Richtungsbereich um das angezielte Zielobjekt (11) zurückgeworfenen Anteilen (12) der optischen Strahlung erfolgt und/oder
▪ das Ermitteln der Entfernung (13) nur unter Einbezug von aus einem definierten Richtungsbereich um das angezielte Zielobjekt (11) zurückgeworfenen Anteilen (12) der optischen Strahlung erfolgt.

15. Computerprogrammprodukt mit Programmcode, der auf einem maschinenlesbaren Träger gespeichert ist oder Computer-Daten-Signal, verkörpert durch eine elektromagnetische Welle, zur Durchführung des Verfahrens nach einem der Ansprüche 11 bis 14, insbesondere wobei der Programmcode das Ermitteln einer Entfernung (13) zum Zielobjekt (11) und das Steuern einer Pulsaussendung der Entfernungsmessung anhand von Raumlagedaten (24,25) des Bewegungssensors (17) durchführt,
speziell wenn der Programmcode in einer Steuereinheit (4) eines optoelektronischen Entfernungsmessers in einem Beobachtungsgerät (99) nach einem der Ansprüche 1 bis 10 ausgeführt wird.

## Claims

1. Portable observation device (99) comprising an observation path, in particular which observation path is unstabilized, for optical targeting of a target object (11),
and comprising an optoelectronic rangefinder for measuring the distance in the direction of the targeting, in particular a laser distance meter with a collimated laser beam as a target axis, comprising:
▪ a transmission unit (5) for emitting a temporal sequence of pulses of optical radiation (10),
▪ a reception unit (1) for receiving a portion (12) of the optical radiation (10) cast back by the target object (11) and for determining signal information of the cast-back portion of an emitted pulse, and
▪ an electronic evaluation unit (4), which is embodied in such a way that a distance (13) to the target object (11) determinable on the basis of a signal travel time between emission and reception of the optical radiation (10, 12),
wherein the distance (13) is determined incorporating the signal information from a specified minimum number of pulses,
which minimum number defines a minimum length of a time window (twd) of the distance measurement, and comprising
a trigger (30) which can be actuated manually and the actuation of which causes a start of the time window (twd) of the distance measurement,
wherein the observation device (99) comprises a movement sensor (17) for acquiring an instability of a spatial position of the observation device (99) and an actuation unit (6) of the rangefinder,
**characterized in that**
the actuation unit (6) is embodied in such a way that the rangefinder is controlled on the basis of spatial position data (24, 25) from the movement sensor (17) in such a way that the pulses counting as part of the minimum number satisfy predetermined criteria in respect of these temporally assigned spatial position data (24, 25), wherein
the control actuates the transmission unit (5), depending on the spatial position data (24, 25) from the movement sensor (17), in such a way that the pulses of the optical radiation (10) are only emitted in a defined directional range about the targeted target object (11).

2. Observation device (99) according to Claim 1,
**characterized in that**
the minimum number
is predetermined as a fixed number or else determined dynamically depending on a signal quality of the reception,
in particular wherein the minimum number is defined as that number of pulses at which a minimum signal-to-noise ratio limit value is reached when determining the distance (13).

3. Observation device (99) according to any one of Claims 1 to 2, **characterized in that** the instability is acquired in the form of an oscillation (24a, 25a) in a spatial direction of the targeting, in particular an oscillation (24a, 25a) caused by trembling movements of a hand (98) holding the observation device (99), and
control is brought about on the basis of a criterion, according to which, in order to incorporate the signal information, a current oscillation value assigned thereto in time lies in a predetermined range about a central region of the oscillation (24a, 25a).

4. Observation device (99) according to Claim 3,
**characterized in that**
the central region of the oscillation (24a, 25a) is a mean value of the movement over a defined period of time before or after a time (38) at which the trigger (30) is actuated.

5. Observation device (99) according to Claim 3 or 4,
**characterized in that**
the predetermined range about the central region of the oscillation (24a, 25a) is set with dynamic or statistical dependence on an amplitude of the oscillation (24a, 25a),
in particular as a percentage, which can be set by the user, of a maximum value of the amplitude or as a percentage of a standard deviation of the amplitude of the oscillation (24a, 25a).

6. Observation device (99) according to any one of Claims 1 to 5, **characterized in that** the control actuates the reception unit (1) depending on the spatial position data (24, 25) from the movement sensor (17) in such a way that only portions (12) of the optical radiation cast back from a defined directional range about the targeted target object (11) are received.

7. Observation device (99) according to any one of Claims 1 to 6, **characterized in that** the control actuates the evaluation unit (4) depending on the spatial position data (24, 25) from the movement sensor (17) in such a way that the distance (13) is only determined incorporating portions (12) of the optical radiation cast back from a defined directional range about the targeted target object (11),
in particular wherein, during the time window, a memory of the evaluation unit (4) records the signal information and the spatial position data (24, 25) assigned in time to emission and/or reception and the determining process is performed using a spatial position data-dependent directional evaluation of the signal information.

8. Observation device (99) according to any one of Claims 1 to 7, **characterized in that** the observation path is configured as an optical transmitted light path from an objective lens (7) to an eyepiece (8).

9. Observation device (99) according to claim 8, **characterized in that**
the transmitted light path is unstabilized and the observation device (99) provides an unstabilized observation image in the eyepiece (8).

10. Observation device (99) according to any one of Claims 1 to 9, **characterized in that** the observation device (99) is embodied with
▪ a sighting apparatus in the observation path of the observation device (99), by means of which a targeting direction is defined,
▪ a residual light amplifier,
▪ a superposition of display images into the observation path,
▪ a deflection of camera images from the observation path,
▪ an angle measurement unit,
▪ a true-north determination unit,
▪ an inclination determination unit and/or
▪ a geographic coordinate determination unit (GPS), in particular wherein an acquisition of data from at least one of the aforementioned units is controlled on the basis of the predetermined criteria.

11. Distance measuring method using a portable distance measuring observation device (99), comprising the following steps:
▪ targeting a target object (11) with an observation path, in particular an optical transmitted light path from an objective lens (7) to an eyepiece (8) of the observation device (99),
▪ triggering a distance measurement in the direction of the targeting by manual actuation of a trigger (30), causing the start of the time window of the distance measurement,
▪ emitting a temporal sequence of pulses of amplitude-modulated optical radiation (10), in particular laser light, in the direction of the targeting using a transmission unit,
▪ receiving a portion (12) of the optical radiation, which is cast back by a target object (11), using a photosensitive electrical component (1), and determining signal information of the received optical radiation (12) using a reception unit (1),
▪ determining a distance (13) to the target object (11) on the basis of a signal travel time between emission and reception of the optical radiation using an electronic evaluation unit (4), wherein the distance (13) is determined incorporating the signal information from a specified minimum number of pulses,
which minimum number defines a minimum length of a time window of the distance measurement,
**characterized by**
acquiring an instability of a spatial position (24, 25) of the observation device (99) using a movement sensor (17) and, by using an actuation unit, controlling the distance measurement on the basis of spatial position data (24, 25) from the movement sensor (17) in such a way that the pulses counting as part of the minimum number satisfy predetermined criteria in respect of these spatial position data (24, 25) assigned in time,
wherein the pulses are only emitted in a defined directional range about the targeted target object (11) .

12. Distance measuring method according to Claim 11,
**characterized by**
predetermining a fixed number for the minimum number, or
dynamically determining the minimum number depending on a signal quality of the reception, in particular wherein reaching a minimum signal-to-noise ratio limit value defines the minimum number when determining the distance (13).

13. Distance measuring method according to Claim 11 or 12,
**characterized in that**
the instability is acquired as an oscillation (24a, 25a) in a spatial direction of the targeting, in particular an oscillation (24a, 25a) caused by trembling movements of a hand (98) holding the observation device (99),
and the control is brought about on the basis of a criterion, according to which, in order to incorporate the signal information, a current oscillation value assigned thereto in time lies in a predetermined range about a central region of the oscillation (24a, 25a), in particular wherein the central region is determined as a mean value of the oscillation (24a, 25a) over a defined period of time before or after a time (38) at which the trigger (30) is actuated.

14. Distance measuring method according to any one of Claims 11 to 13, **characterized in that**
the control is brought about in such a way that in addition to the emission,
▪ only portions (12) of the optical radiation cast back from a defined directional range about the targeted target object (11) are received and/or
▪ the distance (13) is determined incorporating only portions (12) of the optical radiation which are cast back from a defined directional range about the targeted target object (11).

15. Computer program product with program code, which is stored on a machine-readable medium or a computer data signal, embodied by an electromagnetic wave, for carrying out the method according to any one of Claims 11 to 14, in particular wherein the program code determines a distance (13) to the target object (11) and controls the pulse emission of the distance measurement on the basis of spatial position data (24, 25) from the movement sensor (17),
especially if the program code is executed in a control unit (4) of an optoelectronic rangefinder in an observation device (99) according to any one of Claims 1 to 10.

## Revendications

1. Appareil d'observation portatif (99) avec un trajet d'observation, en particulier non stabilisé, pour viser optiquement un objet cible (11), et avec un télémètre optoélectronique pour mesurer des distances dans la direction de visée, en particulier un télémètre laser avec un faisceau laser collimaté comme axe de visée, comprenant :
▪ une unité émettrice (5) pour émettre une suite temporelle d'impulsions de rayonnement optique (10),
▪ une unité réceptrice (1) pour recevoir une partie (12) du rayonnement optique (10) réfléchie par l'objet cible (11) et pour déterminer une information de signal de la partie réfléchie d'une impulsion émise, et
▪ une unité électronique d'évaluation (4) qui est conçue de manière à pouvoir déterminer une distance (13) par rapport à l'objet cible (11) sur la base d'un temps de propagation de signal entre l'émission et la réception du rayonnement optique (10, 12),
la distance (13) étant déterminée en tenant compte de l'information de signal d'un nombre minimal défini d'impulsions,
lequel nombre minimal définit une longueur minimale d'une fenêtre temporelle (twd) de la mesure de distance,
et comprenant
un déclencheur actionnable manuellement (30) dont l'actionnement conditionne un début de la fenêtre temporelle (twd) de la mesure de distance,
l'appareil d'observation (99) présentant un capteur de mouvement (17) pour détecter une instabilité d'une position spatiale de l'appareil d'observation (99) et
une unité de commande (6) du télémètre,
**caractérisé en ce que**
l'unité de commande (6) est conçue de telle sorte que le télémètre est commandé sur la base de données de position spatiale (24, 25) du capteur de mouvement (17) de telle sorte que les impulsions appartenant au nombre minimal remplissent des critères prédéfinis en ce qui concerne ces données de position spatiale (24, 25) associées temporellement, la commande commandant l'unité émettrice (5) en fonction des données de position spatiale (24, 25) du capteur de mouvement (17) de telle sorte que l'émission des impulsions du rayonnement optique (10) a lieu uniquement dans une plage directionnelle définie autour de l'objet cible visé (11).

2. Appareil d'observation (99) selon la revendication 1, **caractérisé en ce que** le nombre minimal est prédéfini sous la forme d'un nombre fixe ou est déterminé dynamiquement en fonction d'une qualité de signal de la réception, en particulier le nombre minimal étant défini comme le nombre d'impulsions auquel une valeur limite de rapport signal/bruit minimal est atteinte lors de la détermination de la distance (13).

3. Appareil d'observation (99) selon l'une des revendications 1 à 2, **caractérisé en ce que**
l'instabilité est détectée sous la forme d'une oscillation (24a, 25a) d'une direction spatiale de la visée, en particulier d'une oscillation (24a, 25a) due à des tremblements d'une prise en main (98) de l'appareil d'observation (99), et
la commande s'effectue sur la base d'un critère selon lequel, pour tenir compte de l'information de signal, une valeur d'oscillation instantanée associée temporellement à celle-ci se situe dans une plage prédéfinie autour d'une plage centrale de l'oscillation (24a, 25a).

4. Appareil d'observation (99) selon la revendication 3, **caractérisé en ce que** la plage centrale de l'oscillation (24a, 25a) est une moyenne du mouvement sur une période de temps définie avant ou après un instant (38) d'actionnement du déclencheur (30).

5. Appareil d'observation (99) selon la revendication 3 ou 4, **caractérisé en ce que** la plage prédéfinie autour de la plage centrale de l'oscillation (24a, 25a) est définie en fonction dynamique ou statistique d'une amplitude de l'oscillation (24a, 25a), en particulier sous la forme d'un pourcentage définissable par l'utilisateur d'une valeur maximale de l'amplitude ou sous la forme d'un pourcentage d'un écart-type de l'amplitude de l'oscillation (24a, 25a).

6. Appareil d'observation (99) selon l'une des revendications 1 à 5, **caractérisé en ce que**
la commande commande l'unité réceptrice (1) en fonction des données de position spatiale (24, 25) du capteur de mouvement (17) de telle sorte que la réception a lieu uniquement pour des parties (12) du rayonnement optique réfléchies depuis une plage directionnelle définie autour de l'objet cible visée (11).

7. Appareil d'observation (99) selon l'une des revendications 1 à 6, **caractérisé en ce que**
la commande commande l'unité d'évaluation (4) en fonction des données de position spatiale (24, 25) du capteur de mouvement (17) de telle sorte que la distance (13) est déterminée uniquement en tenant compte des parties (12) du rayonnement optique réfléchies depuis une plage directionnelle définie autour de l'objet cible visé (11),
en particulier dans lequel, pendant la fenêtre temporelle, une mémoire de l'unité d'évaluation (4) enregistre les informations de signal et les données de position spatiale (24, 25) correspondant temporellement à l'émission et/ou la réception et la détermination est effectuée par une évaluation de la direction des informations de signal en fonction des données de position spatiale.

8. Appareil d'observation (99) selon l'une des revendications 1 à 7, **caractérisé en ce que**
le trajet d'observation est réalisé sous la forme d'un trajet optique en lumière transmise d'un objectif (7) à un oculaire (8).

9. Appareil d'observation (99) selon la revendication 8, **caractérisé en ce que** le trajet en lumière transmise n'est pas stabilisé et l'appareil d'observation (99) fournit une image d'observation non stabilisée dans l'oculaire (8).

10. Appareil d'observation (99) selon l'une des revendications 1 à 9, **caractérisé en ce que**
l'appareil d'observation (99) est réalisé avec
▪ un dispositif de visée dans le trajet d'observation de l'appareil d'observation (99), lequel définit une direction de visée,
▪ un amplificateur de lumière résiduelle,
▪ une insertion d'images d'écran dans le trajet d'observation,
▪ une dérivation d'images de caméra à partir du trajet d'observation,
▪ une unité de mesure d'angle,
▪ une unité de détermination de la direction nord,
▪ une unité de détermination de l'inclinaison et/ou
▪ une unité de détermination des coordonnées géographiques (GPS),
en particulier une commande d'une acquisition de données d'au moins une des unités susmentionnées sur la base des critères prédéfinis ayant lieu.

11. Procédé de mesure de distance avec un appareil d'observation portatif mesurant les distances (99), comprenant:
▪ viser un objet cible (11) avec un trajet d'observation, en particulier un trajet optique en lumière transmise d'un objectif (7) à un oculaire (8) de l'appareil d'observation (99),
▪ déclencher une mesure de distance dans la direction de visée en actionnant manuellement un déclencheur (30), ce qui conditionne un début de la fenêtre temporelle de la mesure de distance,
▪ émettre une suite temporelle d'impulsions de rayonnement optique modulé en amplitude (10), en particulier de lumière laser, dans la direction de visée, avec une unité émettrice,
▪ recevoir une partie (12) du rayonnement optique qui est réfléchie par l'objet cible (11), avec un composant électrique photosensible (1), et déterminer une information de signal du rayonnement optique reçu (12), avec une unité réceptrice (1),
▪ déterminer une distance (13) par rapport à l'objet cible (11) sur la base d'un temps de propagation du signal entre l'émission et la réception du rayonnement optique, avec une électronique unité d'évaluation (4), la distance (13) étant déterminée en tenant compte de l'information de signal d'un nombre minimal défini d'impulsions, lequel nombre minimal définit une longueur minimale d'une fenêtre temporelle de la mesure de distance,
**caractérisé par**
une détection d'une instabilité d'une position spatiale (24, 25) de l'appareil d'observation (99) avec un capteur de mouvement (17) et une commande, avec une unité de commande, de la mesure de distance sur la base des données de position spatiale (24, 25) du capteur de mouvement (17) de telle sorte que les impulsions appartenant au nombre minimal remplissent des critères prédéfinis en ce qui concerne ces données de position spatiale (24, 25) associées temporellement, les impulsions étant émises uniquement dans une plage directionnelle définie autour de l'objet cible visé (11).

12. Procédé de mesure de distance selon la revendication 11, **caractérisé par** une prédéfinition d'un nombre fixe pour le nombre minimal, ou
une détermination dynamique du nombre minimal en fonction d'une qualité de signal de la réception, en particulier le nombre minimal étant défini par l'atteinte d'une valeur limite de rapport signal/bruit minimal lors de la détermination de la distance (13).

13. Procédé de mesure de distance selon la revendication 11 ou 12, **caractérisé en ce que**
l'instabilité est détectée sous la forme d'une oscillation (24a, 25a) d'une direction spatiale de la visée, en particulier d'une oscillation (24a, 25a) due à des tremblements d'une prise en main (98) de l'appareil d'observation (99),
et la commande s'effectue sur la base d'un critère selon lequel, pour tenir compte de l'information de signal, une valeur d'oscillation instantanée associée temporellement à celle-ci se situe dans une plage prédéfinie autour d'une plage centrale de l'oscillation (24a, 25a), en particulier la plage centrale étant déterminée en tant que moyenne de l'oscillation (24a, 25a) sur une période définie avant ou après un instant (38) d'actionnement du déclencheur (30).

14. Procédé de mesure de distance selon l'une des revendications 11 à 13, **caractérisé en ce que**
la commande est effectué de telle sorte qu'en plus de l'émission,
▪ la réception a lieu uniquement pour les parties (12) du rayonnement optique réfléchies depuis une plage directionnelle définie autour de l'objet cible visé (11) et/ou
▪ la distance (13) est déterminée uniquement en tenant compte des parties (12) du rayonnement optique réfléchies depuis une plage directionnelle définie autour de l'objet cible visé (11).

15. Produit programme d'ordinateur avec un code de programme stocké sur un support lisible par machine ou un signal de données d'ordinateur matérialisé par une onde électromagnétique pour mettre en oeuvre le procédé selon l'une des revendications 11 à 14, en particulier le code de programme déterminant une distance (13) par rapport à l'objet cible (11) et commandant une émission d'impulsions de la mesure de distance sur la base de données de position spatiale (24, 25) du capteur de mouvement (17), en particulier lorsque le code de programme est exécuté dans une unité de commande (4) d'un télémètre optoélectronique dans un appareil d'observation (99) selon l'une des revendications 1 à 10.
